# EUROPEAN PATENT APPLICATION

(11) **EP 4 822 526 A1**
(43) Date of publication of application: **14.10.2026**
(21) Application number: 25178295.9
(22) Date of filing: 22.05.2025
(51) Int. Cl.: G06F 9/451, G06F 16/904

(54) **MAP VISUALIZATION TRANSLATION TOOL**

(30) Priority: 07.04.2025 US 202563784456 P; 01.05.2025 US 202519196059
(71) Applicant: Palantir Technologies Inc., Aventura, Florida 33180 (US)
(72) Inventor: MOORE, Rebecca, Denver, 80202 (US); TUER, Michael, Denver, 80202 (US); MILLER, Westin, Denver, 80202 (US); ANDERSON, Leah, Denver, 80202 (US); BONING, Gabe, Denver, 80202 (US); BECKER, Madeleine, Denver, 80202 (US); XU, Jason, Denver, 80202 (US)
(74) Representative: Sayer, Robert David

(57) **Abstract**

A system or computerized method may receive a request from a front-end application for visualizing a plurality of data objects on a geospatial map, each of the data objects associated with a corresponding data object type. A system or method may access an ontology that includes associations between data object types and rendering specifications, the rendering specifications being in a standard format for a plurality of front-end applications. A system or method may be based on the rendering specifications associated with the plurality of data objects, generating a plurality of renderables corresponding to each of the plurality of front-end applications. A system or method may provide corresponding renderables to the requesting front-end application that are usable to visualize the plurality of data objects on the geospatial map.

## Description

### TECHNICAL FIELD

The present disclosure relates to systems and techniques for data integration, analysis, and visualization. More specifically, implementations of the present disclosure relate to computerized systems and techniques for using software tools to visualize an object model and/or ontology to generate interactive visualizations across multiple software applications.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Computers can be programmed to perform calculations and operations utilizing one or more software-based workflows or applications. For example, a software application can facilitate systematic organization and automation of tasks and processes on computing systems, and may streamline operations and enhance efficiency in the execution of tasks and processes. Once created or deployed, the software application may be operated, and/or updated to accomplish certain user objectives.

### SUMMARY

The systems, methods, and devices described herein each have several aspects, no single one of which is solely responsible for its desirable attributes. Without limiting the scope of this disclosure, several non-limiting features will now be described briefly.

Software-based workflows or applications can facilitate systematic organization and automation of tasks and processes on computing systems and may streamline operations and enhance efficiency in the execution of tasks and processes. Once created or deployed, a workflow or a software application may be operated and/or updated to accomplish certain user objectives. For example, map renderings of geospatial data can provide useful visualizations on front-end applications that can simplify the geospatial data as easy-to-understand map images that illustrate how the data is interconnected and help users decide what actions to take based on the data. Accordingly, there are many different front-end applications that can provide different tools on how to analyze these map visualizations. Map rendering translates an ontology for the data, which includes defined relationships (e.g., links, data dependencies, lineage, or provenance) between components (e.g., data objects, actions, functions, logics), from semantically meaningful object types into a desired visual representation on the front-end map.

However, different front-end applications can require different logic, communicated to the front-end applications as "renderables," to perform this translation. Accordingly, even if a user has the ontology for their data and rendering logic that provides logic to translate to renderables that provide the stylization and/or shapes a map on a first front-end application, they may not be able to necessarily use that same rendering logic to render a map on a different second front-end application. That is because even when two different front-end applications have similar rendering behaviors, or "renderables," for the data object types to display similar map renderings from the same ontology, the rendering logic providing the logic that drives the styling and rendering behaviors of the object types of the ontology to arrive at each map rendering can drastically differ. As such, a second set of rendering logic may need to be independently developed to produce a similar map rendering on the second front-end application. This can be an inefficient use of time for the developer and provides a barrier to entry for consumers interested in using a different front-end application.

The present disclosure describes systems and methods (generally collectively referred to herein as a "visualization translation system" or simply a "system") that can advantageously overcome various of the technical challenges mentioned above, among other technical challenges. More specifically, various implementations of the systems and methods of the present disclosure can advantageously enable translation of object data from an ontology to the rendering logic of multiple different front-end applications for display in maps of those front-end applications.

Advantageously, the system can provide a framework for shared map rendering as part of an ontology software development kit ("SDK") or as its own map rendering SDK. This framework can be a middle layer between the ontology and the front-end applications that generate map "renderables" based on a rendering specification that centralizes the logic for object types and their relationships in the ontology. The system can execute functions to generate similar renderables from corresponding logic that can be specific to each front-end application based on the centralized rendering specification. Each of these different rendering logic can then produce renderables that provide a similar visualization on different front-end applications because they are derived from the same rendering specification and can be updated once to affect the updates across all the renderables. In some instances, rendering logic can be generated for more than one front-end application. In other instances, a single rendering logic can be generated for all front-end applications. The rendering logic can include logic for various classes of outputs (such as 3D renderables), and each of the front-end applications may have differing capabilities for the classes of output. Accordingly, a rendering logic may include logic for all classes of outputs, but a front-end application may only use the portions of the rendering logic applicable to its capabilities.

In some instances, different front-end applications can understand the rendering specification intended for another front-end applications, but may have different capabilities or not have the capability at all. However, the front-end application may not be apple to generate similar renderables that the other front-end application may have translated them into. In other instances, the translated renderables can be similar. The system can take advantage of these similarities where needed to generate rendering logic for a particular front-end application from the rendering specification. Advantageously, this can reduce the amount of time and effort to produce different rendering logics with unique logics for each front-end application, and similarly, reduce the barrier of entry for consumers to try the different front-end applications. Furthermore, the system can provide visual consistency to user using more than one or switching between multiple front-end applications with geospatial visualization capabilities.

Additionally, various implementations of the present disclosure are inextricably tied to computer technology. In particular, various implementations rely on detection of user inputs via graphical user interfaces, calculation of updates to display electronic data based on those user inputs, automatic processing of related electronic data, application of language models and/or other artificial intelligence, and provision of the updates to display information via interactive graphical user interfaces. Such features and others (e.g., processing and analysis of large amounts of electronic data) are intimately tied to, and enabled by, computer technology, and would not exist except for computer technology. For example, the interactions with displayed data described below in reference to various implementations cannot reasonably be performed by humans alone, without the computer technology upon which they are implemented. Further, the implementation of the various implementations of the present disclosure via computer technology enables many of the advantages described herein.

According to various implementations, large amounts of data may be automatically and dynamically processed interactively in response to user inputs, and the processed data is efficiently and compactly presented to a user through interactive user interfaces of the system. Thus, in some implementations, the user interfaces described herein are more efficient compared to previous user interfaces in which data is not dynamically updated and compactly and efficiently presented to the user in response to interactive inputs.

Further, as described herein, the system may be configured and/or designed to generate user interface data useable for rendering the various interactive user interfaces described. The user interface data may be used by the system, and/or another computer system, device, and/or software program (for example, a browser program), to render the interactive user interfaces. The interactive user interfaces may be displayed on, for example, electronic displays (including, for example, touch-enabled displays).

Additionally, it has been noted that the design of computer user interfaces that are useable and easily learned by humans is a non-trivial problem for software developers. The present disclosure describes various implementations of interactive and dynamic user interfaces that are the result of significant development. This non-trivial development has resulted in the user interfaces described herein which may provide significant cognitive and ergonomic efficiencies and advantages over previous systems. The interactive and dynamic user interfaces include improved human-computer interactions that may provide reduced mental workloads, improved decision-making, reduced work stress, and/or the like, for a user. For example, user interaction with the interactive user interface via the inputs described herein may provide an optimized display of, and interaction with, models and model-related data, and may enable a user to more quickly and accurately access, navigate, assess, and digest the model-related data than previous systems.

Thus, various implementations of the present disclosure can provide improvements to various technologies and technological fields, and practical applications of various technological features and advancements. For example, as described above, existing software application management and integration technology is limited in various ways, and various implementations of the disclosure provide significant technical improvements over such technology. Additionally, various implementations of the present disclosure are inextricably tied to computer technology. In particular, various implementations rely on the operation of technical computer systems and electronic data stores, automatic processing of electronic data, and the like. Such features and others (e.g., automatically generating machine learning models to fulfill specific user requests, processing, and analysis of large amounts of electronic data, management of data migrations and integrations, and/or the like) are intimately tied to, and enabled by, computer technology, and would not exist except for computer technology. Further, the implementation of the various implementations of the present disclosure via computer technology enables many of the advantages described herein, including more efficient management of various types of electronic data (including computer-based models).

Various combinations of the above and below recited features, embodiments, and aspects are also disclosed and contemplated by the present disclosure.

Additional implementations of the disclosure are described below in reference to the appended claims, which may serve as an additional summary of the disclosure.

In various implementations, systems and/or computer systems are disclosed that comprise one or more computer-readable storage mediums or devices comprising, configured to store, and/or storing program instructions, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising one or more computer-readable storage mediums or devices, and/or one or more computer-readable storage mediums or devices, are disclosed, wherein the computer-readable storage mediums comprise, are configured to store, and/or store program instructions, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
FIG. 1 is a block diagram illustrating an example visualization translation system in an example computing environment, according to various implementations of the present disclosure;
FIG. 2 shows an example object-centric conceptual data model of an ontology developed with the visualization translation system, according to various embodiments of the present disclosure;
FIG. 3 is a block diagram illustrating an example map rendering process, according to various implementations of the present disclosure;
FIG. 4 is a flowchart illustrating example routines for generating renderables for geospatial map visualization, according to various implementations of the present disclosure;
FIG. 5A shows an example interactive graphical user interface in a software development environment associated with a unique rendering logic, according to various implementations of the present disclosure;
FIG. 5B shows an example interactive graphical user interface in a software development environment associated with a centralized rendering specification, according to various implementations of the present disclosure;
FIG. 5C shows an example interactive graphical user interface in a front-end application environment associated with a centralized rendering specification, according to various implementations of the present disclosure;
FIG. 6A shows an example visualization of a first set of data objects on a geospatial map on a first front-end application using rendering logic corresponding to the first front-end application, according to various implementations of the present disclosure;
FIG. 6B shows an example visualization of the first set of data objects on a geospatial map on a second front-end application using rendering logic designed for the first front-end application, according to various implementations of the present disclosure;
FIG. 6C shows an example visualization of data objects on a geospatial map on the second front-end application using rendering logic generated using a visualization translation system from a centralized rendering specification associated with the rendering logic corresponding to the first front-end application, according to various implementations of the present disclosure;
FIG. 6D shows an example visualization of data objects on a geospatial map on a third front-end application using rendering logic generated using a visualization translation system from the centralized rendering specification associated with the rendering logic corresponding to the first front-end application and second front-end application, according to various implementations of the present disclosure;
FIG. 6E shows an example 3-D visualization of data objects on a geospatial map on the third front-end application corresponding to the 2-D visualization shown in FIG. 6D using rendering logic generated using a visualization translation system, according to various implementations of the present disclosure;
FIGS. 7A-C show example visualizations of data objects on a geospatial map on a front-end application with different stylization for the data objects, according to various implementations of the present disclosure;
FIGS. 8A-C show example visualizations of data objects on a geospatial map on a front-end application with different stylization for the data objects, according to various implementations of the present disclosure;
FIGS. 9A-E show example visualizations of data objects on a geospatial map on front-end applications with different rendering capabilities, according to various implementations of the present disclosure;
FIG. 10A shows two example visualization of data objects on a geospatial map on a front-end application with the left visualization displaying a first set of data objects in a first style and the right visualization displaying a second set of data objects in a second style, according to various implementations of the present disclosure;
FIG. 10B shows an example combined visualization of data objects on a geospatial map generated from combining the left visualization of the first data objects from FIG. 10A with a file type associated with the example right visualization of second data objects, according to various implementations of the disclosure;
FIG. 10C shows the example combined visualization of data objects on the geospatial map in FIG. 10B with the second set of data objects being updated to display a third style caused by adjustments using an example interactive graphical user interface in a front-end application environment associated with a centralized rendering specification, according to various implementations of the present disclosure; and
FIG. 11 is a block diagram of an example computer system consistent with various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

### Overview

As mentioned above, software-based workflows or applications can facilitate systematic organization and automation of tasks and processes on computing systems and may streamline operations and enhance efficiency in the execution of tasks and processes. Once created or deployed, a workflow or a software application may be operated and/or updated to accomplish certain user objectives. For example, map renderings of geospatial data can provide useful visualizations on front-end applications that can simplify the geospatial data as easy-to-understand map images that illustrate how the data is interconnected and help users decide what actions to take based on the data. Accordingly, there are many different front-end applications that can provide different tools on how to analyze these map visualizations. Map rendering translates an ontology for the data, which includes defined relationships (e.g., links, data dependencies, lineage, or provenance) between components (e.g., data objects, actions, functions, logics), from semantically meaningful object types into a desired visual representation on the front-end map.

However, different front-end applications can require different logic to perform this translation. Accordingly, even if a user has the ontology for their data and rendering logic to provide the logic to translate into renderables to provide the visualization for a map on a first front-end application, they may not be able to necessarily use that same rendering logic to render a map on a different second front-end application. Even if the map could be rendered using that same rendering logic on the second front-end application, the visual representation on the map may drastically differ because the logic provided by the rendering logic may not be applicable in the second front-end application. Accordingly, a front-end application using the rendering logic intended for a different front-end application can result in inconsistent visualizations between the front-end applications, duplicative computations, and increased bugs. This could be caused by many other reasons, including but not limited to, differences in capabilities between the front-end applications, etc. That is because even when two different front-end applications have similar rendering behaviors, or "renderables," to display similar map renderings from the same ontology, the rendering logic that drives the rendering behaviors, such as styling, of the object types of the ontology to arrive at each map rendering can drastically differ. As such, a second set of rendering logic may need to be independently developed to produce the logic for a similar map rendering on the second front-end application. Moreover, separate rendering logic may need to be independently developed for each and every different front-end application, even if similar map renderings are visualized in each application from the rendering specification. This can be an inefficient use of time for the developer and provides a barrier to entry for consumers interested in using a different front-end application.

As mentioned above, the present disclosure describes systems and methods (generally collectively referred to herein as a "visualization translation system" or simply a "system") that can advantageously overcome various of the technical challenges mentioned above, among other technical challenges. More specifically, various implementations of the systems and methods of the present disclosure can advantageously enable translation from an ontology to a rendering specification that centralizes the logic, which can be executed to generate rendering logic on one front-end application or generate rendering logic to translate into renderables to render a similar map visualization on a different front-end application that would have otherwise required developing its own logic.

Advantageously, the system can provide a framework for shared map rendering as part of an ontology software development kit ("SDK") or as its own map rendering SDK. This framework can be a middle layer between the ontology and the front-end applications through a centralized rendering specification for object types and their relationships in the ontology. This rendering specification can be translation of the object types through renderer functions and then passed to the specific mapping libraries for each front-end application to develop the rendering logic, which visualizes the ontology into each map. The system can generate application programming interfaces (APIs) for each of these renderables based on the rendering logic. When a front-end application receives the rendering logic to visualize the ontology, the system can access the APIs associated with the renderables. The particular front-end application can access servers and/or databases to pull the information requested that are related to the renderables to be visualized onto the front-end application. The APIs can act as an intermediary between the requested input (e.g., the renderables of the ontology) with actual data that forms the visualization of the input. Advantageously, this can reduce the amount of time and effort to produce different rendering logic with unique logic for each front-end application, and similarly, reduce the barrier of entry for consumers to try the different front-end applications.

Furthermore, the system, advantageously, allows for the generated rendering logic to be suited for the various different front-end applications. The system can provide default renderables for different object types or groups of object types, and/or allow the user to adjust them as needed. For example, the user can adjust the default renderables using software code to update the renderer functions. If different front-end applications have different capabilities, the system can generate rendering logic to account for these different capabilities, such as by encoding the renderables as vector tiles. For example, if the capability for the resolution of geospatial location data differs between the applications, the translation would base the rendering logic with the logic for map rendering according to the maximum supported resolution for each application, such that the amount of object data from the ontology is only used to the extent that it could be displayed on the map of each front-end application, e.g., city borders in a first front-end application versus property lines in a second front-end application. Further examples include including time properties for temporal renderables as compared to static renderables. By another example, the system can translate into suitable renderables even when one front-end application is only suitable for two-dimensional ("2-D") mapping and the other is capable of performing three-dimensional ("3-D") mapping, such as by including altitude properties.

Furthermore, advantageously, the system can provide various ways to adjust the middle-layer for additional capabilities. For example, when changes are applied to a map using a front-end application, the renderables generated to display that change can be used by the system and the rendering behaviors can be translated back to the rendering specification so that it can generate further rendering logic that can be used for another front-end application, such that similar change can be displayed there. For example, if icons for object types in one front-end application are altered to be blue instead of red, then the system can generate rendering logic that allow a user to also make similar alterations in a second front-end application so that the same object types are now also displayed as blue. By way of another example, the system can also be customizable so that the users may update it to be usable with new front-end applications, such as by providing data on how the rendering specification for the object types would translate into rendering logic with a respective logic for the new front-end application. This update could be by adjusting the software code for the system, for example within the map rendering SDK layer. Advantageously, this can allow the system to be compatible with third-party front-end applications for map rendering.

### Example Features Related to Interactive Graph Generation

As noted above, the system may generate interactive node graph or graphical representations comprising geospatial maps to provide interactive visualizations of data dependencies and relationships between components of a software application or a software-based workflow in compact and dynamic manners. For example, the system can access one or more data stores that store a configuration of a software application. The configuration of the software application may include information used for configuring the software application, such as widgets (e.g., a button, a tab with which users can interact), code (e.g., Python code), variables, and/or functions used to configure the software application. In some implementations, the configuration of the software application can be stored using a JavaScript Object Notation ("JSON") format to define or describe the information (e.g., widgets, code, variables, and/or functions) and relationships (e.g., dependencies, lineage, or provenance) among the information used for configuring the software application.

More specifically, the system may access the configuration to extract the widgets, the code, the variables, and/or the functions along with relationships of the information for configuring the software application. Based on the extraction and/or the relationships, the system may parse or traverse at least the widgets, the code, the variables, and/or the functions to determine that one or more actions and one or more data object types are referenced or used by the widgets, the code, the variables, and/or the functions, and the one or more actions and the one or more data object types are associated with the software application as renderables. By parsing and/or traversing the information included in the configuration, the system may also determine lineage or provenance among the one or more actions, the one or more data object types, and the software application.

In some implementations, the system may utilize a data processing service (e.g., a similarity search service) and/or an ontology to parse the widgets, the code, the variables, or the functions to identify the one or more actions, the one or more data object types, and the lineage among the one or more actions, the one or more data object types, and the software application. For example, the code of the software application may refer to an identification number of a data object type without further identifying the data object type. By utilizing the ontology to parse the code, the system may identify additional information (e.g., properties of the data object type, links between the data object type and other data object types) about the data object type and include the additional information in an interactive geospatial map to be generated. Advantageously, ontology may be helpful for the system to identify relationships, properties, and/or links between data object types and understand the overall structure of the software application.

Based at least on the one or more actions and one or more data object types identified from parsing or traversing the configuration, the system may generate an interactive graphical representation of the geospatial map. The interactive graphical representation may include nodes and edges, where nodes represent the one or more actions, the one or more data object types, and/or the software application. Edges may represent the relationships and dependencies between the nodes to indicate lineage or provenance among the one or more actions, the one or more data object types, and the software application determined based on the configuration.

In some implementations, node(s) in the interactive graphical representation may include user interface elements (e.g., icon, button, or the like) that indicate and/or provide additional information about a data object type, an action, or a software application represented by the node(s). For example, a node representing a software application may include a first user interface element indicating that the one or more data object types are associated with the software application. The node may further include a second user interface element indicating that the one or more actions are associated with the software application. Advantageously, these user interface elements may allow users to quickly identify actions and data object types that are associated with a software application.

The system may allow users to interact with the interactive graphical representation by making selections on nodes, edges, and/or user interface elements associated with the nodes. For example, selecting a user interface element of a node (e.g., the user interface element represents one or more actions associated with a software application that is represented by the node) may trigger the display of additional nodes and/or edges, which may represent further details or information (e.g., other software applications associated with the one or more actions, data object types associated with the one or more actions) about the one or more actions. Such interaction between the interactive graphical representation may enable users to explore and understand the relationships and dependencies within the software application in an efficient, dynamic, and intuitive manner. Additionally, displaying additional details through the interactive graphical representation in response to user interactions (e.g., selecting specific nodes) is conducive to allowing the system to provide compact and efficient visualization, thereby improving the layout and display of nodes and edges to ensure that the interactive graphical representation is easy for users to navigate and understand.

### Example Features Related to User Interfaces

The system may further allow users to interact with the system through a user interface (e.g., a graphical user interface ("GUI") or other types of user interfaces) and/or receive user operations on an interactive graphical representation that is presented through a user interface. As noted above, the system may use one or more user interfaces for a local software development environment to display a programming session to enable a developer to compose and execute lines of software code and view associated output results and build a software application quickly and interactively. The user interface may be configured to support a wide variety of programming languages, including but not limited to TypeScript, Scala, Python, HTML, JavaScript, Ruby, and so on.

As noted above, the system may use one or more user interfaces, to generate the interactive graphical representation associated with a software application, and the software application itself using a data set. The user interface may allow users to make selections to generate a software application based on an uploaded data set associated with the ontology. Furthermore, the system may use one or more user interfaces to present the interactive graphical representation associated with a software application, and the software application itself. The user interface may allow users to make selections on nodes, edges, and user interface elements within the interactive graphical representation. For example, selecting a node representing a data object type may trigger the display of additional nodes and edges, providing further details about the data object type through the user interface.

The one or more user interfaces may be displayed, for example, via a web browser (e.g., as a web page), a mobile application, or a standalone application. The user interfaces may also be displayed on any suitable computer device, such as a cell/smart phone, tablet, wearable computing device, portable/mobile computing device, desktop, laptop, or personal computer, and are not limited to the samples as described herein. The user interfaces and functionality may be provided by software executing on the individual's computing device with a server located remotely that is in communication with the computing device via one or more networks, and/or some combination of software executing on the computing device and a system associated with the server.

### Further Example Information Related to Various Implementations

To facilitate an understanding of the systems and methods discussed herein, several terms are described below and herein. These terms, as well as other terms used herein, should be construed to include the provided descriptions, the ordinary and customary meanings of the terms, and/or any other implied meaning for the respective terms, wherein such construction is consistent with context of the term. Thus, the descriptions below and herein do not limit the meaning of these terms, but only provide example descriptions.

The term "model," as used in the present disclosure, can include any computer-based models of any type and of any level of complexity, such as any type of relational, sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like.

A Language Model is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

While certain aspects and implementations may refer to the use of a language model, LLM, and/or AI, those aspects and implementations may be performed by any other language model, LLM, AI model, generative AI model, generative model, ML model, NN, multimodal model, and/or other algorithmic processes. Similarly, while certain aspects and implementations are discussed herein with reference to use of a ML model, language model, or LLM, those aspects and implementations may be performed by any other AI model, generative AI model, generative model, NN, multimodal model, and/or other algorithmic processes.

In various implementations, the models of the present disclosure may be locally hosted, cloud managed, accessed via one or more Application Programming Interfaces ("APIs"), and/or any combination of the foregoing and/or the like. Additionally, in various implementations, the models of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

A User Operation (or "User Input") can be any operations performed by one or more users to user interface(s) and/or other user input devices associated with a system (e.g., the data extraction system). User operation can include a request for task(s) to be performed, such as by using a machine learning model and/or an LLM, in whole or in part. User operation can include a request for data, such as data accessed and/or processed by one or more services. User operation can include one or more queries, one or more questions, one or more requests, or the like. User operation may include one or more natural language instructions for some data analysis (e.g., prediction, estimation, classification, or the like) to be performed. User operations can include, for example, select, drag, move, group, or the like, one or more interactive graphical representations for updating an ontology.

A Software Application (or "Front-end Application" or "Application") can be any computer-executable program or group of programs, scripts, routines, and/or the like, designed to perform specific tasks for users. The tasks performed can range from productivity functions, such as document processing, email management, and spreadsheet management, to entertainment, such as gaming and media playback, or other types of tasks. A software application may be built to run on various platforms, including desktop computers, mobile devices, servers, web browsers and/or the like, and they can interact with the underlying operating system to utilize hardware resources and provide a user interface for interaction. A software application may be developed using programming languages and frameworks that are suited to the target platform. A software application can be used to perform various actions (e.g., visualize a geospatial map, send or unsend an email, edit or update a document, or the like) on various data objects of data object types (e.g., a document data object, a log data object, an email data object, or the like).

An Ontology can include stored information that provides a data model for storage of data in one or more databases and/or other data stores. For example, the stored data may include definitions for data object types and respective associated properties. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions or indications of associated functions associated with data object types. These functions may be executed when a data object of the associated type is accessed. An ontology may constitute a way to represent things in the world. An organization may use an ontology to model a view on what objects exist in the world, what their properties are, and how they are related to each other. An ontology may be user-defined, computer-defined, or some combination of the two. An ontology may include hierarchical relationships among data object types. An organization may use an ontology to model a view of, or provide a template for, what objects exist in the world, what their properties are, and how they are related to each other.

A Data Object (or "Object" or "Data Object Instance") is a data container for information representing a specific thing in the world that has a number of definable properties. For example, a data object can represent a machine learning model. A data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth. A data object may be of a data object type, where the data object is stored in a database that is associated with an ontology that defines the data object type.

A Data Store is any computer-readable storage medium and/or device (or collection of data storage mediums and/or devices). Examples of data stores include, but are not limited to, optical disks (e.g., CD-ROM, DVD-ROM, and the like), magnetic disks (e.g., hard disks, floppy disks, and the like), memory circuits (e.g., solid state drives, random-access memory (RAM), and the like), and/or the like. Another example of a data store is a hosted storage environment that includes a collection of physical data storage devices that may be remotely accessible and may be rapidly provisioned as needed (commonly referred to as "cloud" storage). According to various implementations, any data storage, data stores, databases, and/or the like described in the present disclosure may, in various implementations, be replaced by appropriate alternative data storage, data stores, databases, and/or the like.

A Database or Data Set is any data structure (and/or combinations of multiple data structures) for storing and/or organizing data, including, but not limited to, relational databases (e.g., Oracle databases, PostgreSQL databases, MySQL databases, and the like), non-relational databases (e.g., NoSQL databases, and the like), in-memory databases, spreadsheets, comma separated values (CSV) files, eXtensible markup language (XML) files, TeXT (TXT) files, flat files, spreadsheet files, and/or any other widely used or proprietary format for data storage. Databases are typically stored in one or more data stores. Accordingly, each database referred to herein (e.g., in the description herein and/or the figures of the present application) can be understood as being stored in one or more data stores. Additionally, although the present disclosure may show or describe data as being stored in combined or separate databases, in various implementations such data may be combined and/or separated in any appropriate way into one or more databases, one or more tables of one or more databases, and/or the like. According to various implementations, any database(s) described in the present disclosure may be replaced by appropriate data store(s). Further, data source(s) of the present disclosure may include one or more databases, one or more tables, one or more data sources, and/or the like, for example. The data source(s) can include one or more ontologies, one or more rendering specifications, one or more data objects of the data object types and their associated properties and/or relationships, one or more renderables generated based on the rendering specifications, one or more configurations for front-end applications, one or more mapping libraries for the front-end applications, one or more stored user inputs or requests, one or more visualizations of the geospatial maps, one or more functions associated with the front-end applications, one or more function executors, and one or more application programming interfaces (APIs). The one or more ontologies can include, but are not limited to, definitions for the data object types, definitions for property types of the data object types, relationship types of the data object types, and associations between the data object types and the rendering specifications to provide a desired rendering behavior when rendering data objects of the data object type.

### Example System and Related Computing Environment

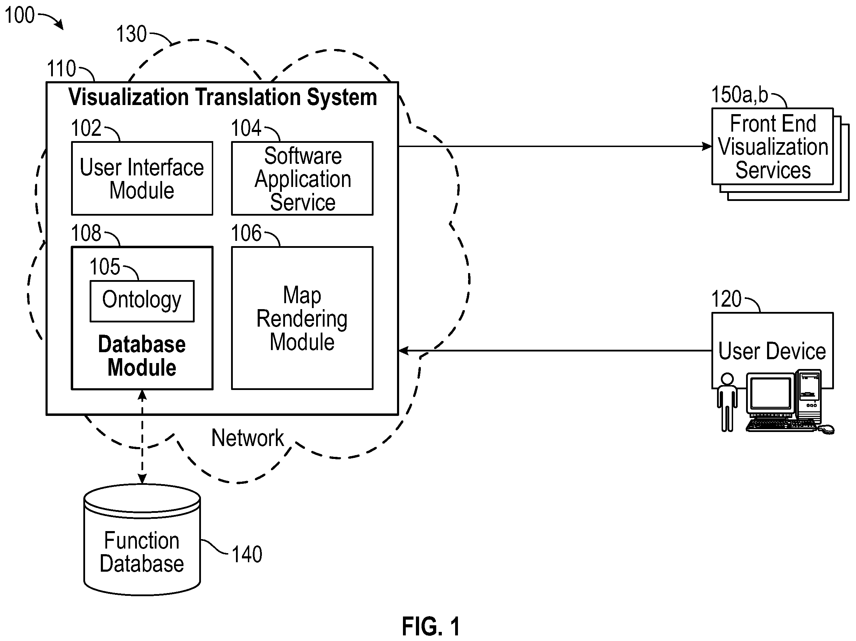

FIG. 1 illustrates an example computing environment 100 including an example visualization translation system in communication with various devices to respond to a user input or a triggering event, according to various implementations of the present disclosure. The example computing environment 100 includes the visualization translation system 110, one or more front-end visualization services 150, a network 130, and a user device 120 (and/or user computing device). In the example of FIG. 1, the visualization translation system 110 may comprise various modules, including a user interface module 102, a software application service 104, a database module 108 that includes an ontology 105, and a map rendering module 106. In some embodiments, the example computing environment 100 can include, or be in communication with, a function database 140. In other embodiments, the example computing environment 100 and the visualization translation system 110 may include fewer or additional components.

In the example of FIG. 1, the various devices are in communication via a network 130, which may include any combination of networks, such as one or more local area network (LAN), personal area network (PAN), wide area network (WAN), Global System for Mobile Communications (GSM) network, a Code Division Multiple Access (CDMA) network, a Long Term Evolution (LTE) network, the Internet, and/or any other communication network. The network 130 can use protocols and components for communicating via the Internet or any of the other aforementioned types of networks. For example, the protocols used by the network 130 may include Hypertext Transfer Protocol (HTTP), HTTP Secure (HTTPS), Message Queue Telemetry Transport (MQTT), Constrained Application Protocol (CoAP), and the like. In various implementations, modules of the illustrated components, such as the user interface module 102, the map rendering map rendering module 106, the database module 108, and the software application service 104 of the visualization translation system 110, may communicate via an internal bus and/or via the network 130.

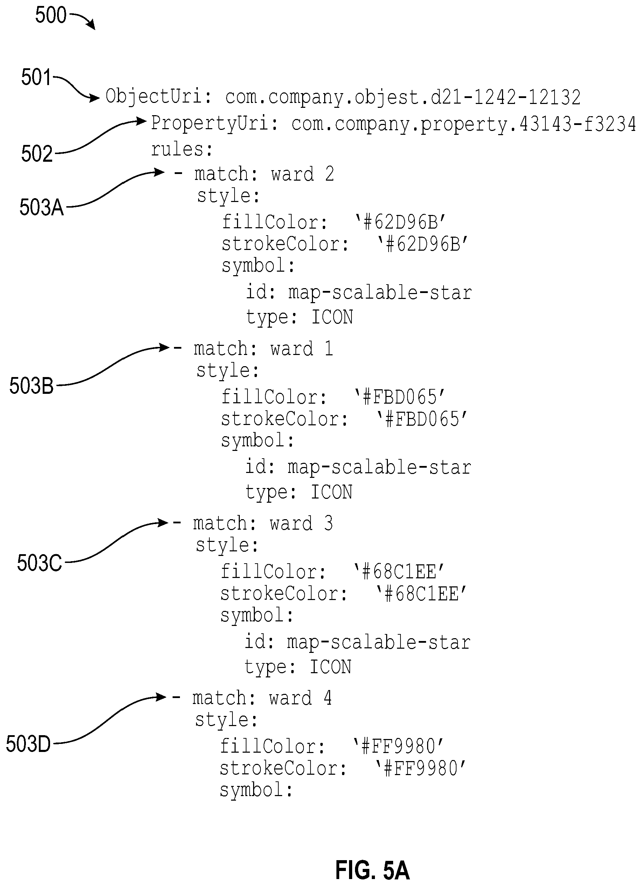

The user interface module 102 is configured to generate user interface data that may be rendered on a user device 120, such as to receive an initial user input, as well as later user input that may be used to initiate further data processing. In various implementations, the functionality discussed with reference to the user interface module 102, and/or any other user interface functionality discussed herein, may be performed by a device or service outside of the visualization translation system 110 and/or the user interface module 102 may be outside the visualization translation system 110. The user interface module 102 may include information used for configuring the software application, such as widgets (e.g., a button, a tab with which users can interact), code (e.g., Python code), variables, and/or functions used to configure the rendering specification through the map rendering module 106. In some implementations, rendering specification can be stored by the software application service 104 using a JavaScript Object Notation ("JSON") format to define or describe the information (e.g., widgets, code, variables, and/or functions) and relationships (e.g., dependencies, lineage, or provenance) among the information used for configuring the software application. Example user interfaces are described in greater detail below with reference to FIGS. 5A-C, 6A-E, 7A-C, 8A-C, 9A-B, and 10A-C.

The database module 108 is configured to store data that may be accessed by the user device 120 and/or various aspects of the visualization translation system 110, as described herein. For example, the database module 108 is configured to store data/information that may be utilized by the map rendering module 106, the software application service 104, and/or accessed or manipulated by the user device 120. The database module 108 of the visualization translation system 110 may obtain and store data and/or information from a data processing service, a database, and/or the function database 140. Data that may be stored by the database module 108 may include any type of electronic data, such as error logs, code files, documents, text, data files, books, manuals, emails, images, audio, video, databases, metadata, positional data (e.g., geo-coordinates), sensor data, web pages, time series data, and/or any combination of the foregoing and/or the like. The database module 108 may store the data using the ontology 105, or based on the ontology 105, which may define data types and associated properties, and relationships among data types, data object types, properties, and/or the like. The ontology 105 may constitute a way to represent things in the world. The ontology 105 may be used by an organization to model a view on what objects exist in the world, what their properties are, and how they are related to each other. The ontology 105 may be user-defined, computer-defined, or some combination of the two. The ontology 105 may include hierarchical relationships among data object types. The database module 108 can contain upwards of millions of data objects organized according to the data object types and defined properties and/or relationships in the ontology 105. The database module 108 can be integrated with a third-party data source that is separate from the visualization translation system 110, such that data objects in the third-party data source can be accessed and integrated with the ontology 105.

The software application service 104 can host, include, and/or provide one or more software applications (such as the front end visualization services 150), and information related to (e.g., configurations for configuring the one or more software applications) the one or more software applications. The software application service 104 may send and receive data to/from user device(s) 120. For example, the software application service 104 may connect to a data processing service through an application programming interface ("API") and retrieve or submit data to/from the data processing service through appropriate API calls. The data processing service may include any quantity of services (or "plug-ins") and any available type of service. For example, the data processing service may include indexing services, services for generating, creating, embedding and/or managing interactive objects in a graphical user interface, services for caching data, services for writing to databases, an ontology traversing service (e.g., for traversing the ontology 105 or performing search-arounds in the ontology 105 to surface linked objects or other data items) or any other services. In some instances, the software application service 104 can be accessed with the user interface module 102 to upload or define a data structure, a data set (associated with data objects of the data object types), or the ontology 105 to the database module 108 over the network 130. The software application service 104, accessed via the user interface module 102, can index the data structure or ontology implementation to develop a software application. The software application service 104 may access and parse the ontology implementation to determine or identify actions (e.g., send an email, unsend an email, edit a document, or the like), data object types (e.g., an email data object type, a document data object type, or the like) that are associated with the software application.

Although not show in FIG. 1, the data processing service may be a part of the visualization translation system 110 (e.g., as part of a data processing service module of the visualization translation system 110), in whole or in part. Similarly, the software application service 104 may receive data from an API from user device(s) 120 through appropriate API calls. The software application service 104 can be utilized to perform various tasks for fulfilling an objective (e.g., sending an email, performing a calculation, editing a document, or the like) and/or a user request from the user device 120.

In some implementations, the visualization translation system 110 may utilize interactive visualization, data analysis, data processing, and/or machine learning techniques to provide interactive analysis of one or more software applications. For example, the visualization translation system 110 may utilize front-end visualization services to generate geospatial maps (or graphical representations including nodes and edges to represent data objects, actions, etc.) of the software application service 104 using a provided logic to transform the semantically meaningful data objects to the desired visual representation (or "rendering behavior"). The visualization translation system 110 may further present the geospatial maps to the user device 120 through the user interface module 102 to facilitate efficient management of data objects, actions, functions, logics, and/or the like associated with software applications of the software application service 104.

Each of the front-end visualization services 150, which can be third-party front-end applications, can analyze data differently and provide a different benefit to a user from the rendered geospatial maps. For example, one front-end visualization service could provide a geospatial map of population in each state of the United States three-dimensionally (3-D), while another may provide the same map of the United States in a higher resolution (e.g., a higher resolution by showing population per county in each state), and another may provide population changes over a period of time in each state. However, each of the front-end visualization services 150 may also need to be configured differently, even if the geospatial map on each looks the same on the front-end, because of differences on the back-end configurations of each mapping software application that may be designed for different functions or logic. This can be due to a variety of reasons including, but not limited to, function execution, processing capacity of each, programming format, styling configurations, etc. The visualization translation system 110 may provide the interactive graphical representation to the user device 120 through a user interface that is provided by the user interface module 102.

The front-end visualization services 150 may access a rendering specification, or individual rendering logics, for a software application, such as a front-end application for visualizing geospatial maps, provided by the software application service 104. The rendering specification or the logics of the software application may include information used for configuring the software application. The software application service 104 can determine the rendering specification or the logic of the software application for the front-end visualization services 150 by determining one or more data object types, their properties, and the relationships associated with the software application. In some implementations, the software application service 104 may utilize the data processing service (e.g., a similarity search service, a data analysis service, or the like) and the ontology 105 of the database module 108 to determine data objects in the data structure that one or more data object types are associated with. Based on the data object types, their properties, and their relationships, the software application service 104 can use functions from the function database 140 to generate rendering logic for the front-end visualization services 150 that provide how a data object type, their properties, and their relationships would be generated using functions accessible from the function database 140. After the rendering logic are generated, the front-end visualization service 150 they were designed for can use the rendering logic to generate renderables to visualize a geospatial map to display the data objects and their relationships on the user interface module 102.

Advantageously, the map rendering module 106 can act as a middle layer to ontologize the data object types, their properties, and their relationships into a rendering specification that can be translated into rendering logic that are formatted to be suited for each of the front-end visualization services 150. Each of the front-end visualization services 150 can be compatible for different classes of outputs. In instances that a front-end visualization service 150 is not compatible, the class of output may not be supported and/or the most complex format can be received for rendering. The map rendering module 106 can be part of the software development kit used to generate the ontology, or separate. The map rendering module 106 unifies the logic that drives the styling and rendering behavior of data object types when representing them as a geospatial map into a centralized rendering specification. In some instances, the logic provided in the rendering logic for each front-end visualization service 150 could be a logic that is designed to provide the same desired rendering behavior in each of geospatial maps. However, these rendering logic may not be compatible with other front-end visualization services 150. The map rendering module 106 generates the rendering specification as a centralized, backend-driven rendering logic using the ontology 105 to unify each of these logics. The software application service 104 can translate this centralized rendering specification into sets of rendering logic, each having logic suited for each of the front-end visualization services 150. Accordingly, rendering logic with suited logic may not need to be prepared for each front-end visualization service 150 as they can all be sourced from the rendering specification. Based on the capabilities of the desired front-end visualization services 150, the map rendering module 106 generates rendering logic from the rendering specification that is compatible.

Additionally, when rendering logic are generated, the map rendering module may be associated with an application programming interface ("API") for the data object rendering according to its function to communicate how the front-end visualization services 150 with the system to display the desired visual implementation, or renderable. Furthermore, the map rendering module 106 can interact with the user interface module 102 to adjust the rendering specification through a software development environment or through interface elements presented alongside the geospatial map. In the latter, a user can make changes using the interface elements to simultaneously change rendering behaviors (such as color or styling) of a displayed geospatial map. In some embodiments, those changes can be communicated back to the map rendering module 106 to update the rendering specification and any other geospatial map on a different front-end visualization service 150b.

A software development environment can be configured to enable a developer to compose and execute lines of software code and view associated output results via a programming session quickly and interactively. The software development environment may be associated with a local server on the user device 120 or accessible by the user device 120. The software development environment can be used to compose software code that defines types for components (e.g., data objects, actions, functions, logics) and relationships (e.g., links, data dependencies, lineage, or provenance) between components. The definition types may be formatted to correspond to data structures or data sets that store the components, such as the data objects. These data structures can be stored in the data store, which are transferred over the network 130 to the database module 108 when developing a software application. These software codes can be formatted as code, variables, and/or functions defining the components and/or relationships according to a domain-specific language, such as but not limited to Typescript, Java, Go, Python, NPM, and/or the like. The software development environment may be enabled for the visualization translation system 110 using a plug-in that can integrate the software development environment with the visualization translation system 110. In some instances, the plug-in can include a Typescript library or other domain-specific language library associated with software code syntax that composed and executed accordingly can provide functionality to the software development environment to develop software applications that operate on components according to the definition types composed.

For example, the software development environment can be used to receive definition types from the user that create a data object type and respective properties of the data object type as software code. Furthermore, the rendering specification or the renderables can be defined using the software development environment. In some instances, the software development environment may also be used to receive updates to define respective data object type as software code. In some instances, the software development environment can be used to receive definition types from a user of an action type with declarations or queries to the properties of an associated data object type or object link type as software code, which can be used in determining the renderables to be associated with the data object type. These declarations can include a condition related to a data object of the associated data object type or an object link of the associated object link type that when met, causes an effect to the data object or object link, such as adjusting an associated property or indication in the data object or object link.

The domain specific language, or development language, of the local software development environment used for the software code, such as but not limited to Typescript, can include a type safe mechanism based on a library of functions and/or rules to confirm that the format of the software code conforms with object type rules from the library of functions and/or rules. For each of these definition types, the software development environment can receive software code associated with an application programming interface ("API") for the renderables that can indicate how to retrieve or submit data associated with the definition type to/from a data processing service through appropriate API calls. The software development environment may be interacted with by the user through the user interface module 102.

### Example Database and Data Models

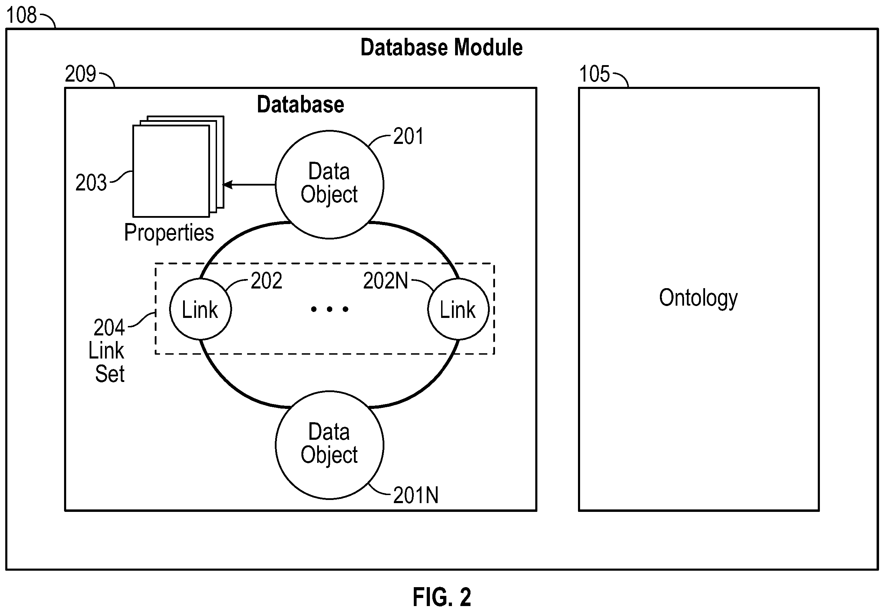

FIG. 2 illustrates an object-centric conceptual data model in the database module 108 according to various implementations of the present disclosure. The database module 108 may store the ontology 105 and the database 209. The ontology 105, as noted above, may include stored information providing a data model for storage of data in the database 209. The ontology 105 may be defined by one or more data object types, which may each be associated with one or more properties. At the highest level of abstraction, data object 201 is a container for information representing things in the world. For example, the data object 201 can represent an entity such as a particular person, place, organization, date, market instrument, item, or other noun, where the entity may appear in text data such as a document, an e-mail message, a news report, a written paper, an article, or the like. Data object 201 can also represent an event that happens at a point in time or for a duration. Each data object 201 may be associated with a unique identifier that uniquely identifies the data object within the database 209 of the database module 108.

In various implementations, different types of data objects may have different property types. For example, a "Person" data object might have an "Eye Color" property type and an "Event" data object might have a "Date" property type. Each property 203 as represented by data in the database module 108 may have a property type defined by the ontology 105 used by the database module 108. Objects may be instantiated in the database 209 in accordance with the corresponding object definition for the particular object in the ontology 105. For example, a specific monetary payment (e.g., an object of type "event") of US$30.00 (e.g., a property of type "currency") taking place on 3/27/2009 (e.g., a property of type "date") may be stored in the database 209 as an event object with associated currency and date properties as defined within the ontology 105. The data objects defined in the ontology 105 may support property multiplicity. In particular, the data object 201 may be allowed to have more than one property 203 of the same property type. For example, a "Person" data object might have multiple "Address" properties or multiple "Name" properties. Each link 202 represents a connection between two data objects 201. In one implementation, the connection is either through a relationship, an event, or through matching properties. A relationship connection may be asymmetrical or symmetrical. For example, "Person" data object A may be connected to "Person" data object B by a "Child Of" relationship (where "Person" data object B has an asymmetric "Parent Of" relationship to "Person" data object A), a "Kin Of" symmetric relationship to "Person" data object C, and an asymmetric "Member Of" relationship to "Organization" data object X. The type of relationship between two data objects may vary depending on the types of the data objects. For example, "Person" data object A may have an "Appears In" relationship with "Document" data object Y or have a "Participate In" relationship with "Event" data object E. As an example of an event connection, two "Person" data objects may be connected by an "Airline Flight" data object representing a particular airline flight if they traveled together on that flight, or by a "Meeting" data object representing a particular meeting if they both attended that meeting. In one implementation, when two data objects are connected by an event, they are also connected by relationships, in which each data object has a specific relationship to the event, such as, for example, an "Appears In" relationship.

As an example of a matching properties connection, two "Person" data objects representing a brother and a sister, may both have an "Address" property that indicates where they live. If the brother and the sister live in the same home, then their "Address" properties likely contain similar, if not identical property values. In one implementation, a link between two data objects may be established based on similar or matching properties (e.g., property types and/or property values) of the data objects. These are just various examples of the types of connections that may be represented by a link and other types of connections may be represented; implementations are not limited to any particular types of connections between data objects. For example, a document might contain references to two different objects. For example, a document may contain a reference to a payment (one object), and a person (a second object). A link between these two objects may represent a connection between these two entities through their co-occurrence within the same document. Each data object 201 can have multiple links with another data object 201 to form a link set 204. For example, two "Person" data objects representing a husband and a wife could be linked through a "Spouse Of" relationship, a matching "Address" property, and one or more matching "Event" properties (e.g., a wedding). Each link 202 as represented by data in the database 209 may have a link type defined by the ontology 105 and/or used by the database 209.

For ease of understanding, in some implementations, data objects (e.g., the data object 201 and the data object 201N), links between data objects (e.g., the link 202 and link 202N) that may represent relationships between the data objects, and properties of data objects (e.g., the properties 203) can be visualized using one or more graphical user interfaces (GUI). For example, an example user interface may show a graphical representation of relationships between data objects that are represented as nodes in the graphical representation. The data objects may include, for example, person data objects, flight data objects, account data objects, computer data objects, and/or the like. The objects/nodes may have relationships and/or links with any of the other objects/nodes.

In some implementations, relationships between data objects may be stored as links, or in some implementations, as properties, where a relationship may be detected between the properties. In some cases, as stated above, the links may be directional. For example, a payment link may have a direction associated with the payment, where one person object is a receiver of a payment, and another person object is the payer of payment.

In addition to visually showing relationships between the data objects, a user interface may allow various other manipulations. For example, the objects within database module 108 may be searched using a search interface (e.g., text string matching of object properties), inspected (e.g., properties and associated data viewed), filtered (e.g., narrowing the universe of objects into sets and subsets by properties or relationships), and statistically aggregated (e.g., numerically summarized based on summarization criteria), among other operations and visualizations. The objects within the database module 108 may be filtered based on conditional rendering functions (which can be represented as program code) that calls only a subset of the data objects based on their properties or relationships. Alternatively, a user can filter the data objects manually by selection of the desired data objects or based on their properties or relationships.

### Example Geospatial Map Translation

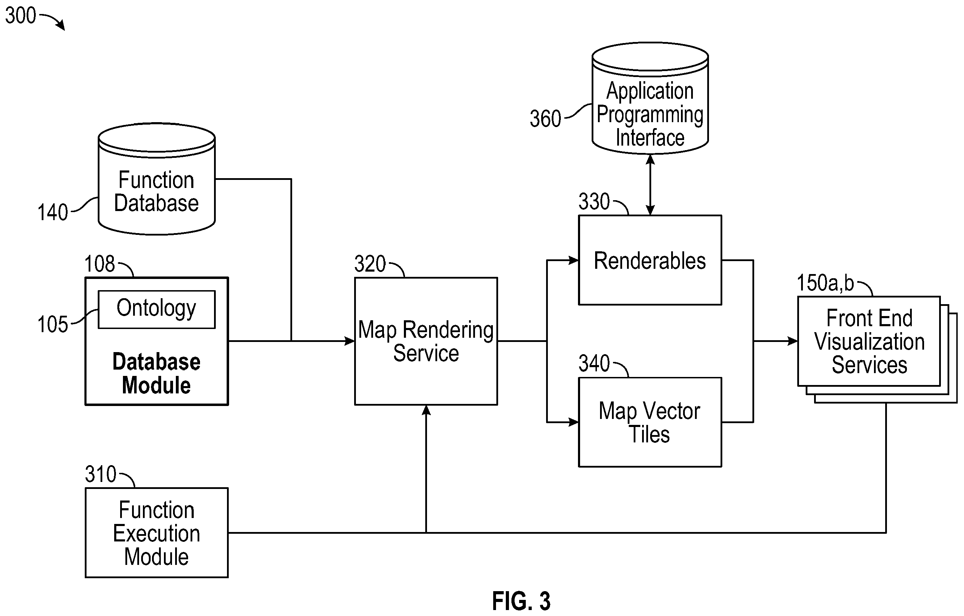

FIG. 3 depicts example connections and/or communications 300 between various modules of the visualization translation system 110 for the map rendering process, including the function database 140, the database module 108, the front-end visualization services 150, the map rendering service 320, the function execution module 310, the renderables 330, the map vector tiles 340, and the application programming interface (APIs) 360. In some embodiments, the front-end visualization services 150 can include communications with the software application service 104 and/or the function execution module 310. In some embodiments, the map rendering module 106 can include the map rendering service 320, the renderables 330, and the map vector tiles 340. In such embodiments, the map rendering service can communicate with the function execution module 310. In some embodiments, the renderables 330 be generated by the APIs 360 communicating between the front-end application and the software application service 104. In other embodiments, the visualization translation system 110 may include fewer or additional connections/communications. The indicated connections and/or data flows of FIG. 3 are exemplary of only certain processes performed by the visualization translation system 110 and are not meant to include all possible blocks and participants. For example, in some instances, the map vector tile 340 are not encoded with the renderables 330, such as if the front-end visualization services 150 support the same scale for object sets.

As shown in FIG. 3, the map rendering service 320 can be utilized to generate renderables 330 that are usable by the front-end visualization services 150 to render the desired visual output based on a rendering specification. Similar to how the ontology 105 can define what a data object type is and/or the relationship between the data object types, the rendering specification ontologizes the rendering behavior of a data object type, its relationships, etc. In some instances, the rendering behavior can be for aggregations of objects. Advantageously, the ontologizing of the rendering behaviors can provide a centralized rendering specification that can be used as a basis for developing renderables with unique logic for each front-end visualization service 150.

Even if a user has geographic data and an ontology 105 defining how the data is organized, a geospatial map may still not be able to be generated. For example, if a user had a data structure in the database module 108 associated with U.S. state capitals and an ontology 105 semantically described that a data object type is U.S. state capitals and included properties such as coordinate points of the state, even if the data structure were organized according to the ontology 105, a front-end application may not be able to directly process that raw data through a front-end visualization service 150 to render a map canvas that illustrates the U.S. state capitals in a map of the U.S.. Rather, front-end visualization services 150 are programmed to read functions associated with the particular front-end visualization service 150, and accordingly the data needs to be transformed so that it is readable for that particular front-end visualization service 150a. In some instances, the rendering logic and respective functions can be stored solely in each of the front-end applications, and do not require being stored in backend storage.

Previously, this would require developing rendering logic specific to not only the particular front-end visualization service 150a that is intended for visualization but particular to the rendering behavior desired. For example, in such instances, a user would be required to develop rendering logic with rendering logic specific to a front-end visualization service 150a if they wanted to depict each U.S. state capital with a U.S. flag at their coordinate location on a map of the U.S. However, the user would be required to develop different renderables due to the unique rendering logic for a different front-end visualization service 150b because it is designed for different functions. Furthermore, a user would also be required to develop different rendering logic for the same front-end visualization service 150a if they want to instead depict each state capital with their respective state flag instead or if they want to highlight rivers that connect one or more state capitals because the rendering logic for this changed rendering behavior would be different. The changes to the rendering logic can require providing different functions to the front-end visualization services 150 to call upon APIs 360 specific to the function capable of performing the desired rendering behavior on the geospatial map. Accordingly, recreating geospatial map rendering behaviors in different front-end applications is repetitive and cumbersome, which can prevent users from taking advantage of the different analytical tools provided by these different front-end visualization services 150. Similarly, changing rendering behaviors in a single particular front-end visualization service 150a can be burdensome as well. For example, if the data object type was "West Coast States" and the user wanted to display them on a state of the US in "blue," the user would need to generate programming code accordingly. However, if a user later wanted to change the color to "red," they would need to go back to the code, adjust it accordingly, and may need to reupload it to the front-end visualization service 150.

The rendering logic for the renderables could be developed or depicted as program code via a software development environment and/or developed through software applications provided by a user interface associated with the system.

The system described herein, such as in Figure 3, advantageously, provides a middle layer that can generate renderables 330 specific to each front-end visualization service 150 by first generating a centralized rendering specification and using the ontologized rendering behavior of each data object type. Accordingly, the rendering specification can be composed of functions defining that an "RX" symbol should be generated for all data object types in the ontology 105 that are stand-alone pharmacies. The map rendering service 320 can then use this rendering specification to generate functions for rendering logic using the function database 140 an intended front-end visualization service 150 and execute the created rendering logic with the function execution module 310. The map rendering service 320 can output renderables 330, similar to those independently developed, for each desired front-end visualization services 150. Each of these renderables 330 can be associated with APIs 360 to generate the desired rendering behavior. However, rather than manually designing each of the renderables with rendering logic for each of the front-end visualization services 150, the visualization translation system 110 provides for automatic generation of the renderables 330 with their unique rendering logic by translating the centralized rendering specification through functions for each of the front-end visualization services 150.

In some instances, the renderables 330 are generalized and not tied to any particular map framework (such as but not limited to GeoJson, circles, ellipses, and associated styles that can be available to each front-end visualization services 150). Accordingly, the front-end visualization services 150 can access a desired mapping library separately to process the renderables 330 to be visually depicted on a geospatial map. The system can include a default rendering specification to output renderables 330 that can have a default styling configuration for the desired visual representation on all front-end visualization services 150. This default rendering specification can be a standard format across all associated front-end visualization services 150. Thus, the rendering specification does not need to be generated first with the visualization translation system 110, and by using the system, a default styling for a geospatial map can be generated in each front-end visualization service 150. For example, if the data object type is U.S. capitals, the system may have a default rendering specification that U.S. capital data object types are displayed as blue circles. Therefore, in some instances, a user not need to input any logic or functions for the rendering specification. For example, if the user inputs the data structure using the system to generate a geospatial map even without providing a rendering specification, then they can receive on the user interface module 102 a geospatial map with the default renderings on each associated front-end visualization service 150.

Furthermore, the visualization translation system 110 can allow for manipulation of the rendering specification through a user interface module 102 associated with the front-end visualization services 150. For example, this user interface module 102 could provide interface elements to select a data object type displayed in a geospatial map of the front-end visualization services 150 and change the associated render behavior, such as changing a rendered circle icon to instead display a star icon for the selected data object type. This input can be re-input into the map rendering service 320 to generate a new rendering specification and, accordingly, new functions to be executed for new renderables 330 that call upon different APIs 360 to visualize an updated geospatial map with the requested change. In some instances, the change in the rendering specification for a first front-end visualization service 150a can automatically cause a geospatial map for a second front-end visualization service 150b to be updated. In some instances, the rendering specification used for each front-end visualization service 150 is updated and automatically applied. In some instances, the prior rendering specification and the updated rendering specification can be saved and accessed later. In some instances, particular renderables for data object types or aggregate data object types can be saved for further use. In such cases, a combination of different renderables can be accessed simultaneously to generate a new rendering specification.

Thus, in some instances, a user may not need to access a software development environment to program the rendering specification at all because of the default rendering specification and updates being made using the user interface module 102 associated with the front-end visualization services 150. However, a user may also override the default rendering specification through the user interface module 102 or the software development environment. In some instances, the updated rendering specification may not be in a standard format that is compatible with all of the front-end visualization services 150. Accordingly, a user may apply rendering logic generated from the updated rendering specification that are specific to a particular map framework for a front-end visualization service 150a and incompatible with other front-end visualization services 150b. The default rendering specification can be configured to be in a standard format (e.g., where the renderable of a particular data object type is a blue circle) so that each of the front-end visualization services 150 can interact with the rendering logic using their own mapping library. Accordingly, each of the front-end visualization services 150 may use their own preferred mapping library to render the data object type such that the blue circle icon may differ across the different front-end visualization services 150, such as different shades of blue or the thickness of the circle. Thus, when a new rendering specification is requested, the requested rendering logic may be compatible with the mapping library for some front-end visualization services 150a and incompatible with other front-end visualization services 150b. For example, if the requested rendering specification for a data object type is the particular U.S. state capital flag, another front-end visualization service 150b may not have a suitable API associated in their mapping library to render the U.S. state capital flag icon. These new rendering specifications can also be set to default and in some instances, the user interface module 102 can display to a use which of the front-end visualization services 150 are compatible with the rendering specification.

The map rendering service 320 can generate more complex renderables output types for front-end visualization services 150 that have higher capacities, such as for multi-resolution 3D model, particle based weather visualizations, etc. In such instances, the service 320 can also generate map vector tiles 340 to be encoded alongside the renderables 330 to support the higher scale object set. The renderables 330 can be served through map vector tiles 340 to accommodate for high-scale data capability of front-end visualization services 150. These map vector tiles 340 can take the geo bounds of the map vector tile 340 and apply filter to the associated data object type or set. The execution of the functions by the function execution module 310 can provide zoom specific view of the geospatial map, such as by sampling or bucketing when there are too many result, and expanding the geo bound of the map vector tiles 340 when sufficiently zoomed in to avoid processing too many renderables within the map vector tiles 340.

Furthermore, the system can support new front-end visualization services 150 by inputting functions associated with the new front-end software application into the function database, and updating the map rendering module 106 to translate the rendering specification into renderables 330 compatible with the front-end software application. In some instances, the function execution module 310 can be updated so that the map rendering service 320 can use the new functions to prepare compatible renderables 330 and map vector tiles 340. Furthermore, user can also design new renderables usable with existing front-end visualization services 150 by adding new functions to the function execution module 310. In some instances, the new front-end visualization service 150 or functions may incorporate new APIs 360 into the visualization translation system 110 or a database may be updated to include the APIs. In other instances, the functions can be incorporated by system administrators and/or users to customize the logic that translates ontological data into renderables on map visualizations. These updates include new front-end visualization services 150 can be initiated by users, and in some instances, be shared so other users can also translate to the new front-end visualization services 150. In some instances, functions for new rendering logic associated with the new front-end visualization service 150 can include additional functions to provide renderables that have similar rendering behaviors in the existing front-end visualization services 150.

In some instances, the renderables 330 may not be tied to a data object type but to a tasking object type. The tasking object type can be included as part of the ontology, and in some instances, can be unrelated to a data object type. The renderables 330 can by a default rendering specification can set a bounding box around the portion of the geospatial map that the tasking object type is intended to search for. However, by adjusting the rendering specification for more complex functions, the renderables 330 for the tasking object type can perform searches within the bounding boxes for detections linked to the tasking object type. In some instances, this renderable 330 can be depicted as a heat grid associated with geospatial mappings of the amount of search hits for each portion of the bounding box. In some instances, the renderables 330 can depict the individual detections of the linked detections and render an icon at their coordinate points in the geospatial map. In some instances, the icons and the heatmap can be simultaneously displayed in the geospatial map.

### Example Functionality and Operations of the System

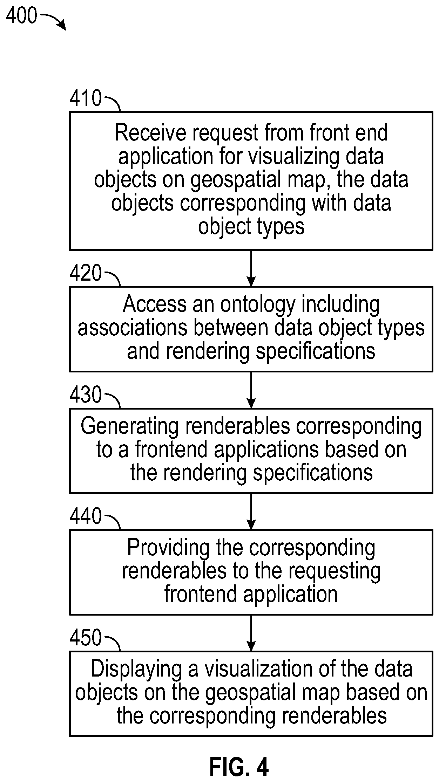

FIG. 4 is a flowchart illustrating example methods 400 according to various implementations. The method 400 may be implemented, for example, by the visualization translations system of FIG. 1 to visualize components and relationships, such as data object types, object link types, and action types, in geospatial maps across multiple front-end applications using a centralized rendering specification. In various implementations, the method 400 may be performed in part or in full by the visualization translation system. Depending on the embodiment, the process of FIG.4 may include fewer or additional blocks and/or the blocks may be performed in an order different than is illustrated. The method 400 can be a computerized method performed by a computing system having hardware processors. In some instances, the computing system can include non-transitory computer readable storage devices that store the software instructions, and which can be executed by the computer system to perform the method 400.

At block 410, the visualization translation system may receive a request from a front-end application for visualizing data objects on a geospatial map. As mentioned above, these data objects can be associated with a corresponding data object type, and in some instances, correspond with object link types, action types, etc. The front-end application can be accessed through a user device to display the geographic map so that the data object renderings would be overlayed onto and can include one or more interface elements to interact with the front-end application. In some instances, there can be more than one front-end application requesting. These additional front-end applications can be the same front-end application on a different user interface or a second front-end application. In some instances, generating a request in one front-end application will generate a request in the other front-end applications. In other instances, requesting to save a new style function of the updated renderables can generate similar requests in other front-end applications.

At block 420, the visualization translation system can access an ontology including associations between data object types and rendering specification. The ontology can include the relationships that semantically define how the data objects of the data object types in the ontology are related and interact. The rendering specification can ontologize how the data object types should be represented to depict the semantically defined relationships in the ontology in a map. The rendering specification can include a default (or standard) rendering behavior for each of the data object types, but in some instances, can be adjusted by the user. In some instances, the system can receive a request for a different rendering behavior than in the original request. For example, the original request can be for the default rendering specification that includes a standardized rendering behavior for each of the front-end applications. The new request can be for a customized rendering behavior, such as requesting that the data object type should be represented by the name of the data object rather than a default blue circle. This request can update the ontology to associate the data object type with the new rendering specification, such that the data object type can be associated with the updated rendering behavior. Both the original rendering specification and the new customized rendering specification can be saved to be accessed for later use.

At block 430, the visualization translation system can generate rendering logic corresponding to a front-end application based on the rendering specification. These rendering logic can be generated by processing the rendering specification using functions corresponding to the requesting front-end application or applications. In some instances, rendering logic can be generated for each available front-end application associated with the visualization translation system or can be generated as requested by front-end applications. The generated rendering logic can be particular to each front-end application and may not be usable to generate the desired visual representation on a different front-end application. These rendering logic can be configured to account for the capabilities of the requesting front-end application, such as if the front-end application supports 3-D rendering. In instances where a request is received for a different rendering behavior, then based on the updated rendering specification associated with the data objects, an updated plurality of renderables can instead be generated corresponding either to the requesting front-end application or a plurality of associated front-end applications. In other instances, the front-end application may only access classes of outputs supported within the rendering logic. These updated renderables can be customized renderables according to the request, such as by adding conditional styling requests for subsets of the data objects. This plurality of associated front-end applications can be all front-end applications that has a mapping library compatible with the requested rendering behavior and can have rendering logic applied to render the requested rendering behavior. In instances where the requested rendering behavior is associated with a rendering specification that is not in a standard format, then the rendering specification may be incompatible with some of the front-end applications and not generate renderables for them.

At block 440, the visualization translation system can provide the corresponding rendering logic to the requesting front-end application. At block 450, the visualization translation system can use the corresponding rendering logic to generate a display of the visualization of the data objects as a geospatial map. A user may make adjustments of the renderables and rendering specification using the interface elements for the front-end application, which can be used to cause change in other front-end applications. The system can also provide the renderables to any other front-end applications that requested the visualization, including the second front-end application. Furthermore, the system can provide updated rendering logic for any other requests associated with the updated rendering specification to each of the requesting front-end applications. The system can automatically display these updates to the visualization in real-time, and in some instances, concurrently across all of the requesting front-end applications.

### Example User Interfaces and Related Functionality

FIG. 5A shows an example interactive graphical user interface 500 in a software development environment for program code associated with renderables with a unique rendering logic for a particular front-end application. This rendering logic 501 for the renderables includes data object type renderings 502 with specific stylization rules 503A-D. The rendering logic 501 shown in FIG. 5A is limited to exact matches of the listed properties in the stylization rules 503A-D. If a property is not listed in the rendering logic 501, then a rendering may not appear on the geospatial map. Furthermore, the rendering logic 501 requires inputting specific data object type IDs, property type IDs, color codes, symbol IDs and types, etc for the stylization rules 503A-D to achieve the desired rendering behavior. Furthermore, each of these specific IDs and types can be tied to the ontology. Accordingly, the rendering logic for a particular front-end application can translate the IDs and types according the configurations that drives translating the rendering logic for that front-end application. In order to translated the IDs and types to a different front-end application using that same rendering logic, the configuration of the front-end applications may need to be the same. Thus, preparing the same geospatial map for a different front-end application would involve accessing a potentially different rendering logic that would generate similar renderables for each of these unique IDs and types for that different front-end application. After processing the geospatial map, any further changes could require going back to the software development environment to update the corresponding program code for the particular front-end application.

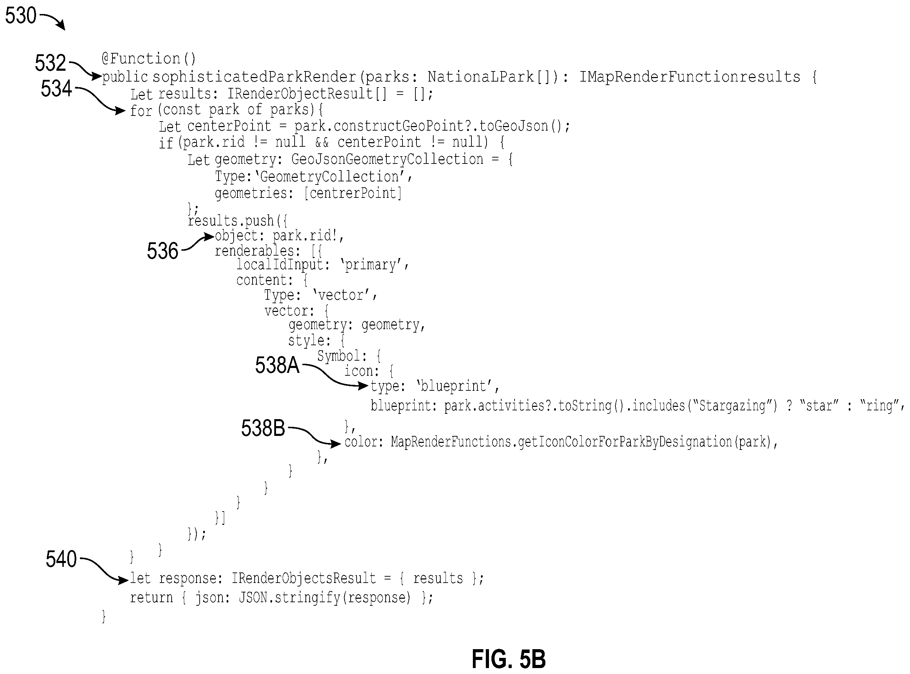

FIG. 5B shows an example interactive graphical user interface 530 in a software development environment for program code associated with a centralized rendering specification 532. The rendering specification 532 includes conditional functions 534 for object type renderables 536 and their rendering behaviors 538A-B that provide conditional styling. Unlike the static program code in FIG. 5A, the rendering specification 532 provides an ontology that connects data object types to a rendering behavior rather than to unique IDs specific to a front-end application. For example, rendering behavior 538A has any data object type, which is for national parks, associated with star gazing changed from the default circle rendering behavior to be a star icon instead. Similarly, rendering behavior 538B changes so that the type of park designates the color of the park. The rendering specification 532 includes a file output 540, which in this example produces a JSON file, which can be used in conjunction with the functions associated with front-end applications to produce renderables from rendering logic specific to the front-end application. This specific rendering logic can be similar to one manually designed shown in FIG. 5A. These conditional styling create subsets of the data objects, which can be based on properties or relationships associated with the data object, and provide rendering specifications to each of these subsets. If changes to the rendering specification 532 are made, in some instances, the changes to the geospatial map can be automatically made, such as after executing the rendering specification 532. In some instances, these changes can be made to each of the front-end applications all at once.

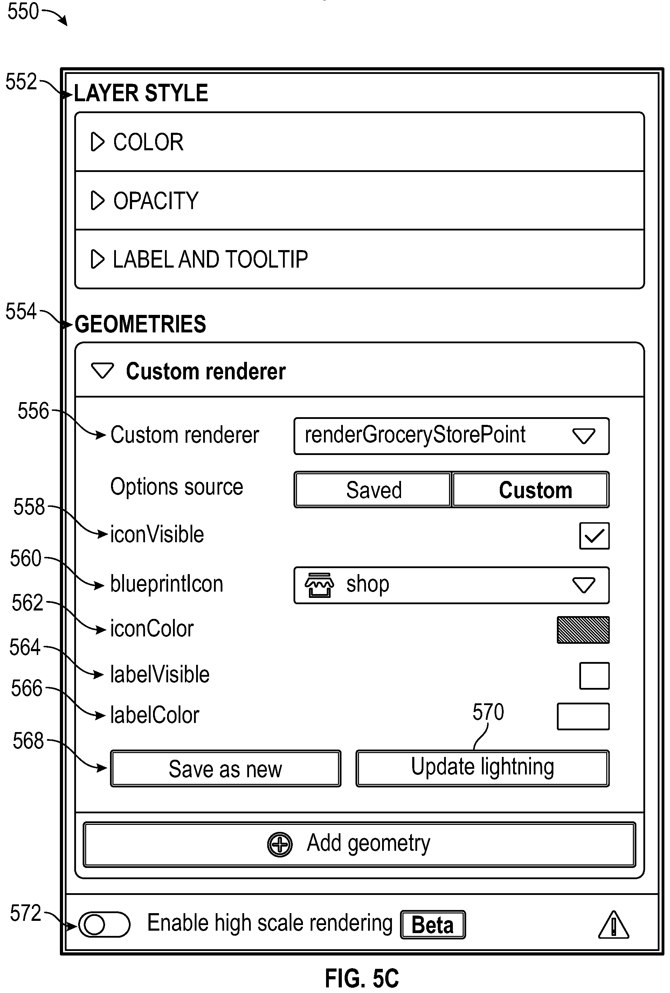

FIG. 5C shows an example interactive graphical user interface 550 in a front-end application environment associated with a centralized rendering specification. Rather than adjusting the rendering specification 532 in a software development environment, the rendering specification 552 can also be adjusted in a user interface associated with the geospatial map using interface elements. The rendering specification 552 can display what is currently visualized on the geospatial map and make immediate changes not only to the associated geospatial map on the front-end application, but in some instances, to other geospatial maps on other front-end applications displaying the current rendering specification 552. The conditional rendering 554 selected in the rendering specification 552 for a data object type or a set of data object types can be selected using the selection of conditional rendering 556. From there a conditional rendering 556 can be accessed, such as between conditional rendering of national parks as default blue circles or conditional rendering of national parks as different shapes and colors based on their properties. In some instances, a conditional rendering 556 option can be designed in the user interface 550. The conditional rendering 556 can allow the user to either select a saved rendering behavior or customize a currently displayed rendering behavior. If the later, after updates to the rendering behavior, the updated rendering behavior could be saved or updating to replace the currently displayed rendering behavior. There can be a variety of rendering behaviors to adjust. For example, iconVisible 558 can be used to set whether a data object type should be displayed, blueprintIcon 560 can be used to set to visualize what icon to represent the data object type with, iconColor 562 can be used to set to visualize what color the icon to represent the data object type with, labelVisible 564 can be used to set to visualize whether to visualize the name of the data object type, labelColor 566 can be used to set to visualize what color to visualize the name of the data object type with. These options can be saved 568 as a new rendering behavior for the data object type or to update 570 a previously existing rendering behavior. In some instances, the interface element for update 570 can display the icon name currently being visualized on the geospatial map. In some instances, the rendering specification 552 can include an interface element 572 for enabling high scale renderings. Enabling high scale renderings can generate map vector tiles embedded with the generated renderables from the map rendering process. Accordingly, the map vector tiles can contain the renderables compressed to allow for a larger amount of data objects to be processable. In some instances, if the amount of data requested to be processed by the front-end application, the system may automatically activate high scale rendering mode.

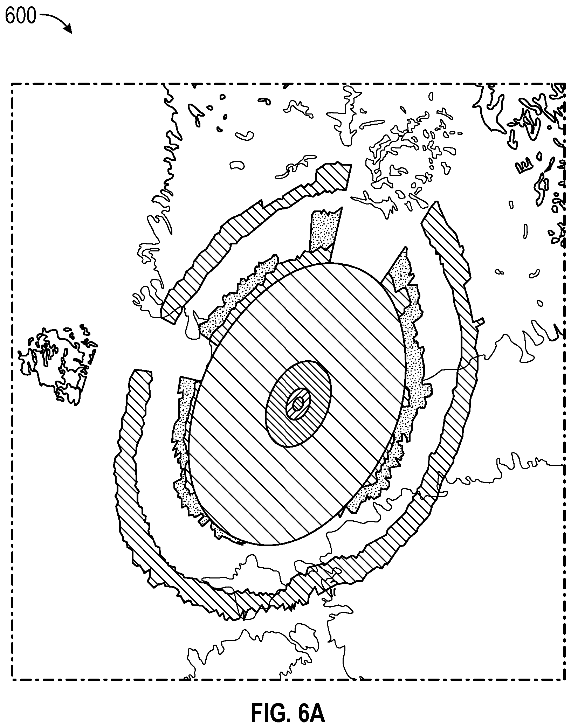

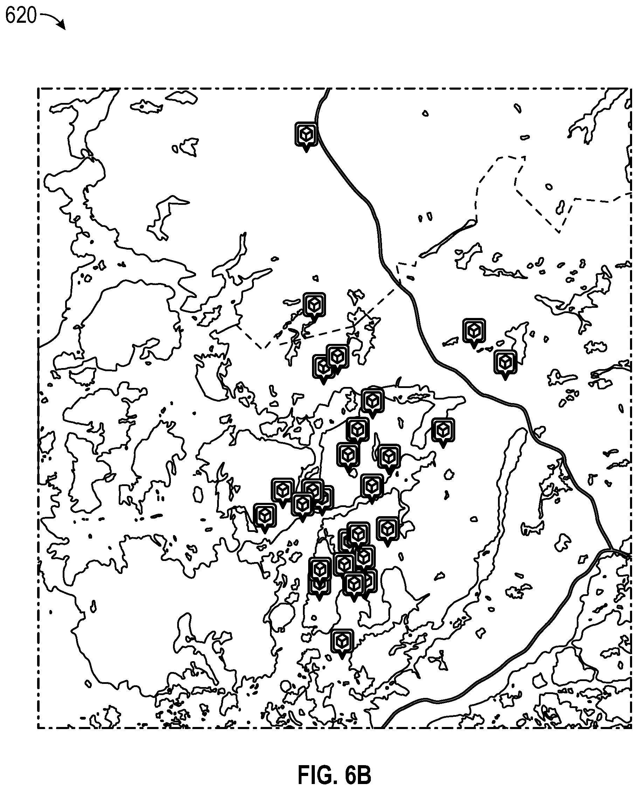

FIGS. 6A-D show a geospatial map visualizing electromagnetic interference of processed data of a defined ontology across different front-end applications and illustrating their different capabilities. FIG. 6A shows an example visualization 600 of a first set of data objects on a geospatial map on a first front-end application using rendering logic corresponding to the first front-end application. The geospatial map is generated according to rendering logic specific to the first front-end application, either by manually designing the rendering logic directly from the ontology or translating it from a centralized rendering specification using functions associated with the first front-end application. As shown in FIG. 6A, the electromagnetic interference is depicted as varying concentrations of shading in a circular pattern to show the strength of the interference. FIG. 6B shows an example visualization 620 of the exact same renderables used in FIG. 6A but processed on a geospatial map on a second front-end application. However, the rendering logic that produced the varying shades of electromagnetic interference in FIG. 6A only displays geographic coordinate points in the FIG. 6B because the second front-end application is unable to read the rendering logic used in the same way as the first front-end application. In other front-end applications, even these coordinate points may not be displayed either. In order to have a similar rendering of the geospatial map as FIG. 6A, the rendering logic for the second front-end application need to be designed for the second front-end application. Accordingly, FIGS. 6A and 6B illustrate the lack of consistency between different front-end applications that are forced to generate their own translation of the same rendering logic.

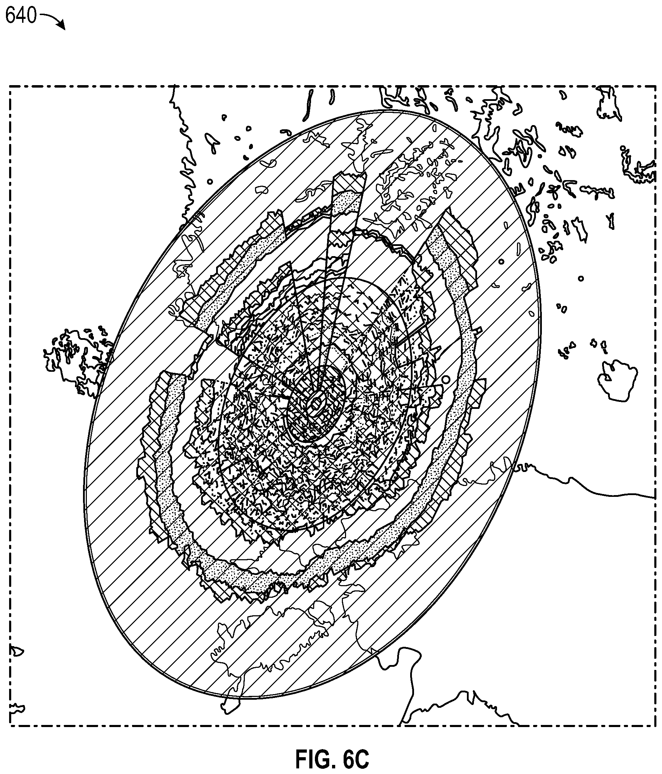

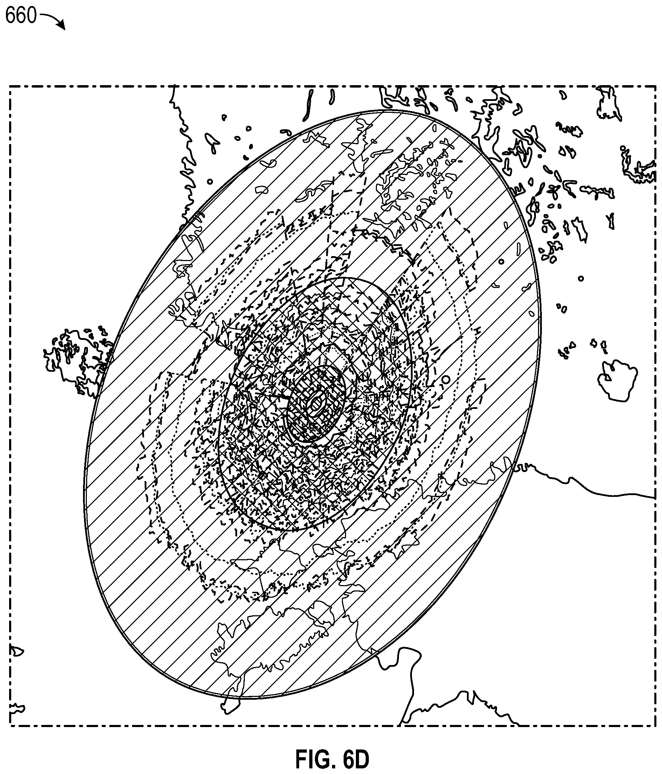

For example, FIG. 6C shows an example visualization 640 of data objects on a geospatial map on the second front-end application using rendering logic readable by the second front-end application. These renderables can be generated using a visualization translation system, as described above, by translating a centralized rendering specification, which is associated with the rendering logic corresponding to the first front-end application, using functions associated with the third front-end application. Although the appearance is not exactly the same, the geospatial map in FIG. 6C resembles the geospatial map in FIG. 6A much more than FIG. 6B did. In some instances, the displayed geospatial map in FIG. 6A and 6C are the default rendering specification for data object types associated with electromagnetic interference sources that display the displayed styles and geoJsons. Similarly, FIG. 6D shows an example visualization 660 of data objects on a geospatial map on a third front-end application using rendering logic generated using a visualization translation system from the centralized rendering specification translated with functions associated with the third front-end application. FIGS. 6A, C-D illustrate geospatial maps that were automatically generated using the visualization translation system that would have otherwise required individually developing three sets of renderables with distinct rendering logics. Advantageously, the rendering specification may only need to be written once or not at all due to the default rendering specification. In some instances, the rendering specification can be the rendering logic for one of the front-end applications.

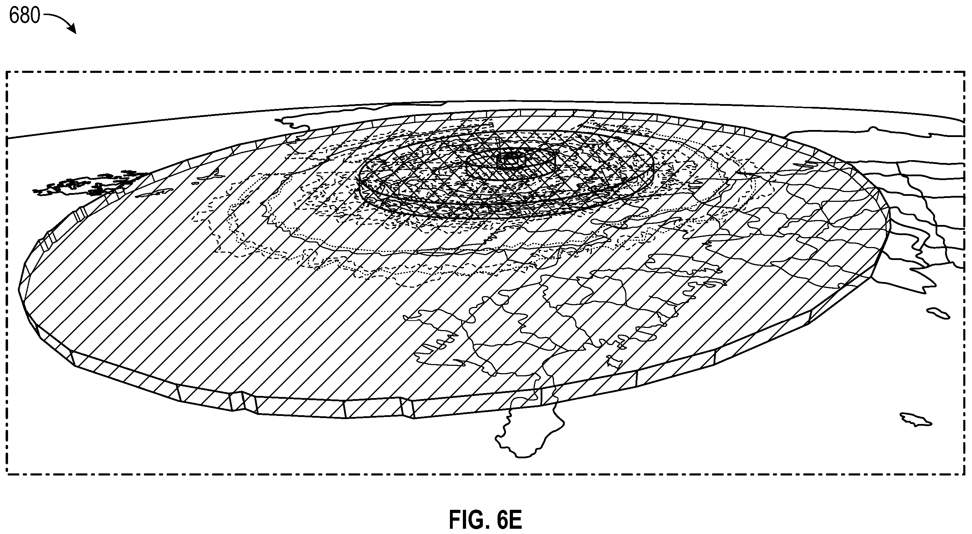

Furthermore, the third front-end application has an extra capability to display 3-D geospatial maps. FIG. 6E shows an example 3-D visualization 680 of data objects on the geospatial map on the third front-end application that corresponds to the 2-D visualization shown in FIG. 6D using renderables generated using a visualization translation system. The 3-D geospatial map can be generated using the same centralized rendering specification, using functions that can produce rendering logic that call upon APIs to generate the 3-D display. In some instances, the map rendering module can encode the renderables with map vector tiles to accommodate the extra capabilities of the front-end application. In some instances, the rendering specification can include the rendering behaviors for how to render 3-D objects if the front-end application can support 3-D renderings. These rendering specifications can include extrusion information for the data object type, such as properties related to the base and height of the data object type.

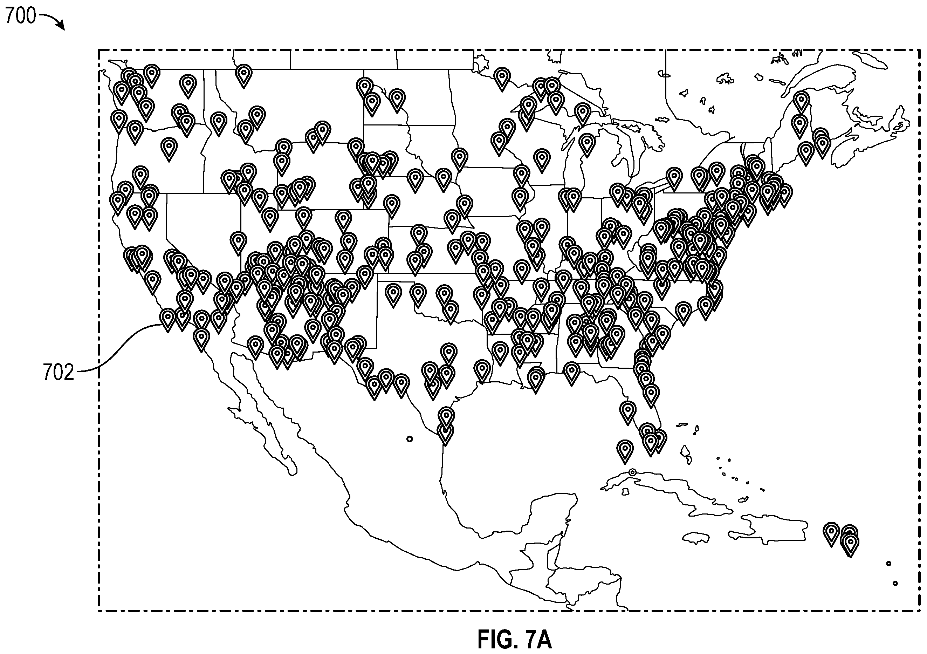

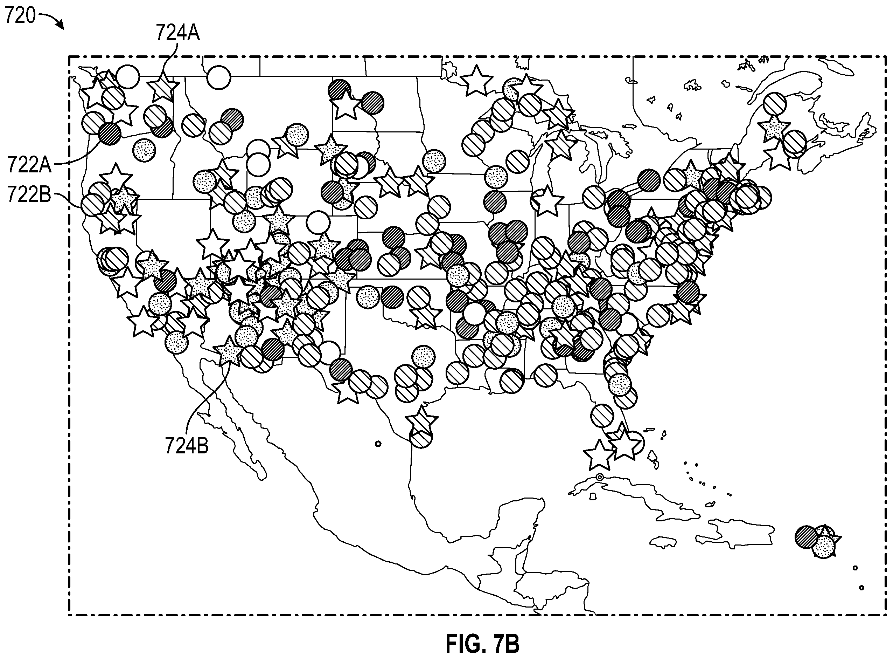

FIGS. 7A-C show example visualizations of data objects on a geospatial map on the same front-end application with different stylization for the data objects. The data objects in these examples are U. S. national parks. FIG. 7A shows an example visualization 700 of the data object types according to their default rendering of location markers 702. FIG. 7B shows an example visualization 720 of the data objects types after conditional formatting. The conditional formatting, in this example, may have changed the default icon for the data object type to circles, may have changed the default icon to stars if the national park has "stargazing activites," and may have adjusted the color for the icon based on the recreational typing of the national park. As such, the icons appear in a variety of shapes and colors (or shading) as compared to FIG. 7A, having circle icons 722A-B and star icons 724A-B.

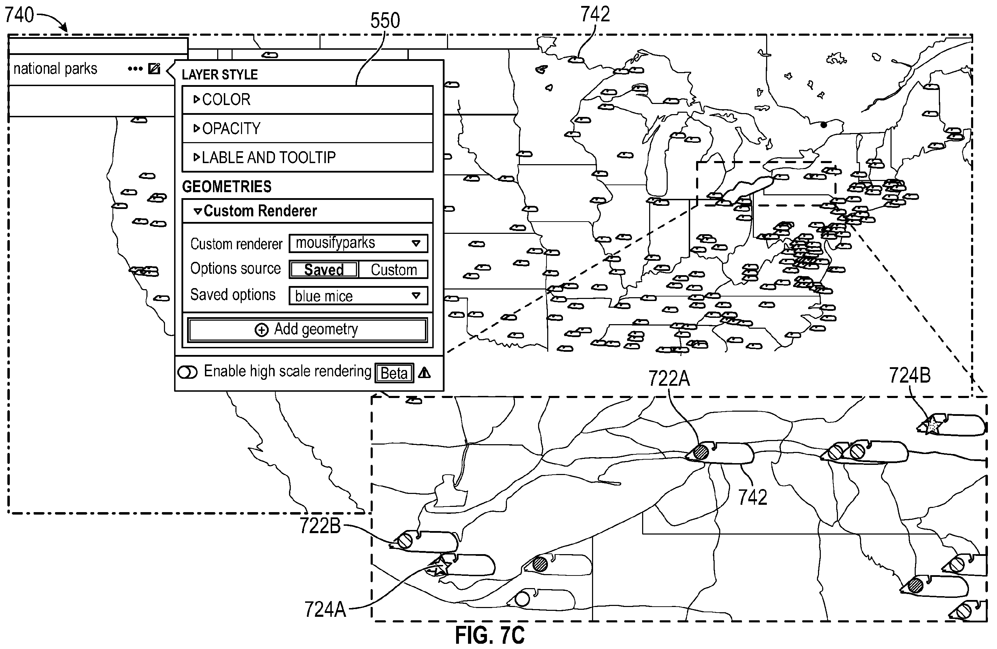

FIG. 7C shows an example visualization 740 of the data object types using multiple sets of renderables for a data object type. FIG. 7C depicts a combinations of the conditional rendering as shown in FIG. 7B with renderables where the data object type icon is a mouse 742. The rendering specification 552 can be overlaid with the geospatial map to automatically adjust the renderables displayed. For example, the rendering specification 552 can include a "Add geometry" interface element to add the additional set of renderables, such as the renderables as shown in FIG. 7B. As shown in the zoomed-in view of FIG. 7C, the mouse 742 icon has an inner conditional rendering for circle 722A-B and star 724A-B icons.

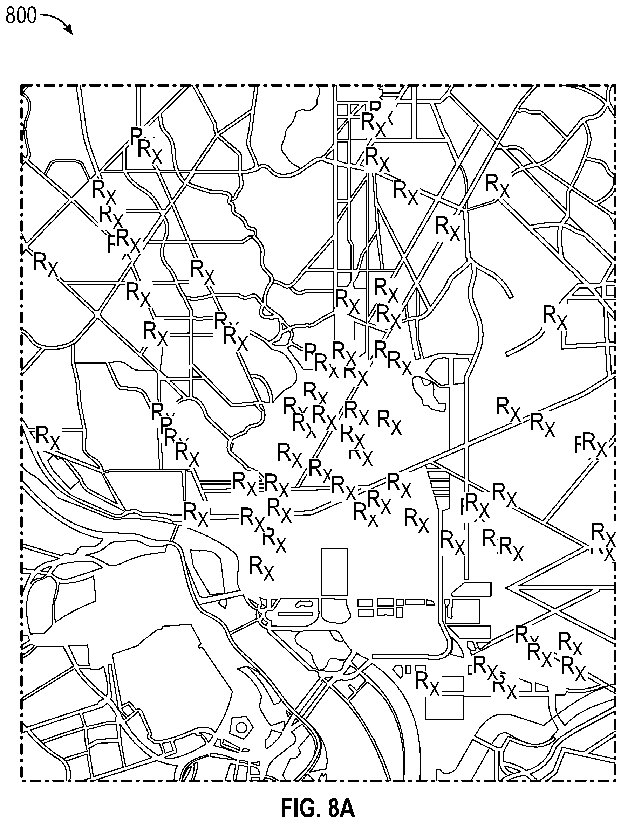

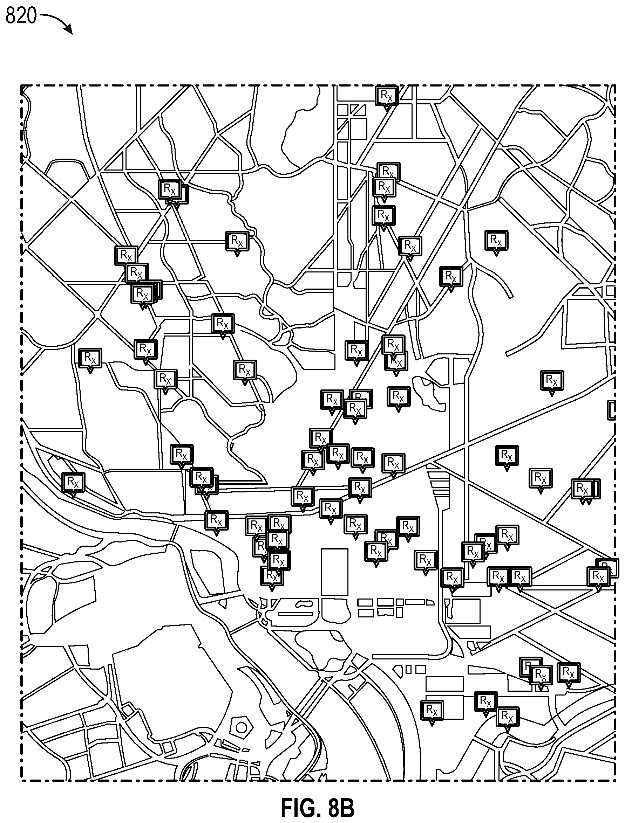

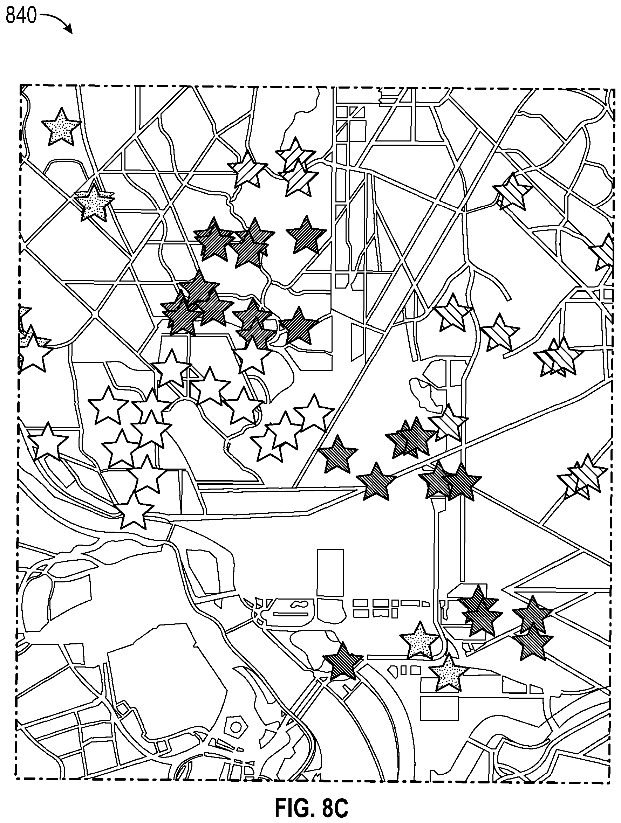

FIGS. 8A-C shows example visualizations 800, 820, and 840 of data objects on a geospatial map on a front-end application with different stylizations for the data objects. In this example, the data object type displayed is pharmacies. FIG. 8A and FIG. 8B displays the data object types in two different icons when presented using two different front-end applications. The different icons can be caused by the differences in the mapping libraries of the two front-end applications, such that even if the rendering specification requested an icon for "RX," the API called by the functions in each front-end application may have received two different "RX" icons during rendering. FIG. 8A and FIG. 8C displays the data objects but with different conditional rendering behaviors on the same front-end application. In FIG. 8C, the default rendering specification may have been adjusted to change the default icon from "RX" to a star, and color (or shading) differences depending on the properties associated with the pharmacy data object. The changes made to the rendering specification can be made through a user interface presented with each geospatial map or in a software development environment. The changes made can be automatically applied to different front-end applications, for example, if a user adjusted the rendering specification from those shown in FIG. 8A to the conditional renderings in FIG. 8C in a first front-end application, the same changes could be automatically applied to the second front-end application visualized in FIG. 8B. However, similar to how the "RX" icons differ in FIG. 8A and FIG. 8B, the mapping library used to render stars in the second front-end application may not appear the same as the star icons shown in FIG. 8C.

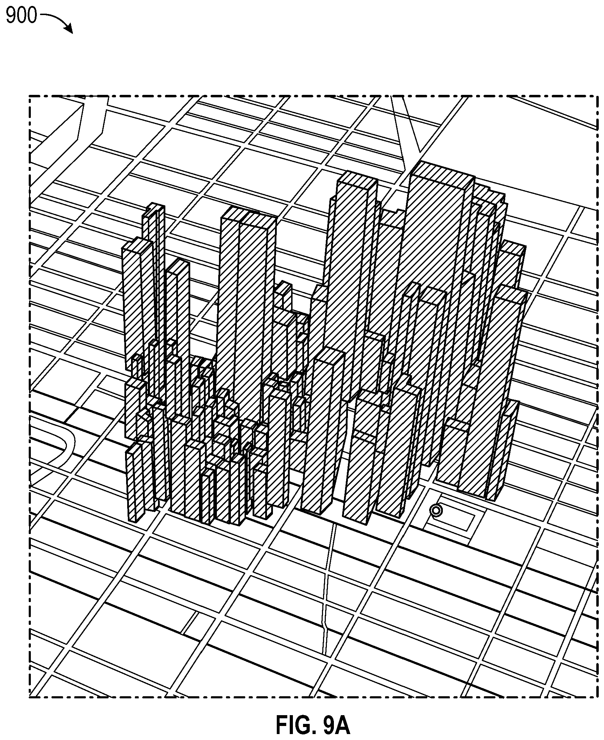

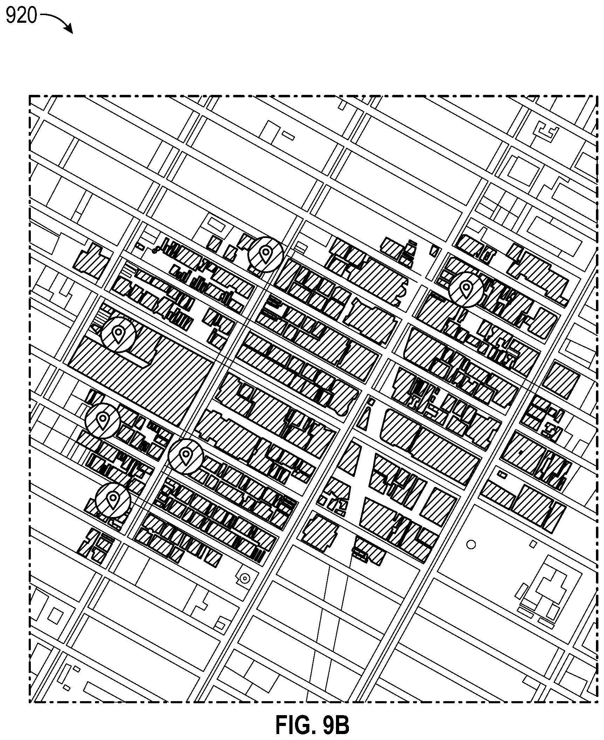

FIGS. 9A-E show example visualizations of data objects on a geospatial map on front-end applications with different rendering capabilities. FIG. 9A shows an example visualization 900 of a geospatial map of New York buildings on a front-end application that supports 3-D renderings. The rendering specification used to generate the example visualization 900 can include conditional rendering, such as determining if the data objects are a building data object type, with the rendering being geoJsons for the geometry of the building. Furthermore, the rendering specification can specify the color (or shading) of the renderables. Additionally, if the front-end application is configured for 3-D renderings, such as the front-end application displayed in FIG. 9A, then it can use aspects of the rendering specification related to that, such as extrusion properties, including but not limited to the base and height properties of the building data object type. The example visualization 900 shows a filtered subset of data objects of the building data object type near a specified geospatial area of the overall map. As shown in FIG. 9A, filtering is applied so that only about a few dozen buildings near time square are rendered from the millions of building data objects in New York City. However, due to the capabilities of the front-end application, the rendered buildings can appear as a three-dimensional (3-D) geospatial map. However, FIG. 9B shows an example visualization 920 of a front-end application that does not support 3-D renderings. Instead, this second front-end application can display the filtered subset of data objects near time square as 2-D renderings. Furthermore, despite the different capabilities to process classes of outputs between the different front-end applications, the rendering of their renderables is consistent. For example, despite the buildings in FIG. 9A and B differing based on 2D versus 3D capabilities, the depiction of the buildings in both are the same color. Thurs, where the capabilities of different front-end applications differ, there are still shared similarities in the renderables depiction from their venn diagram intersection of similarities.

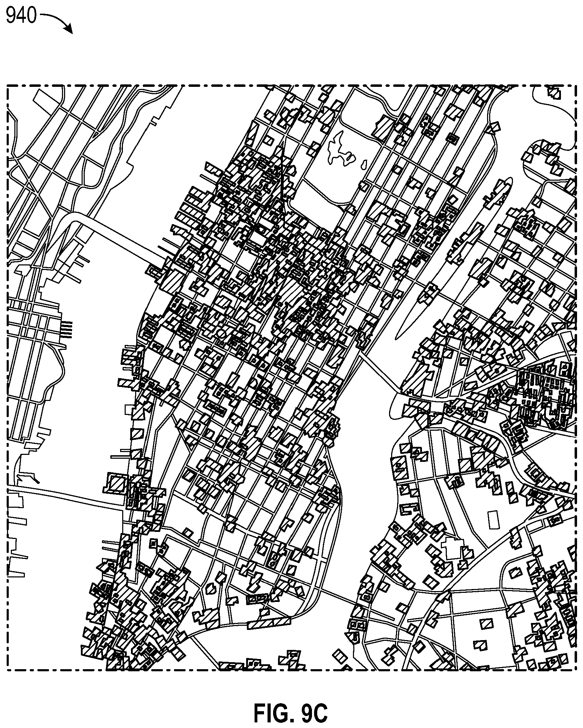

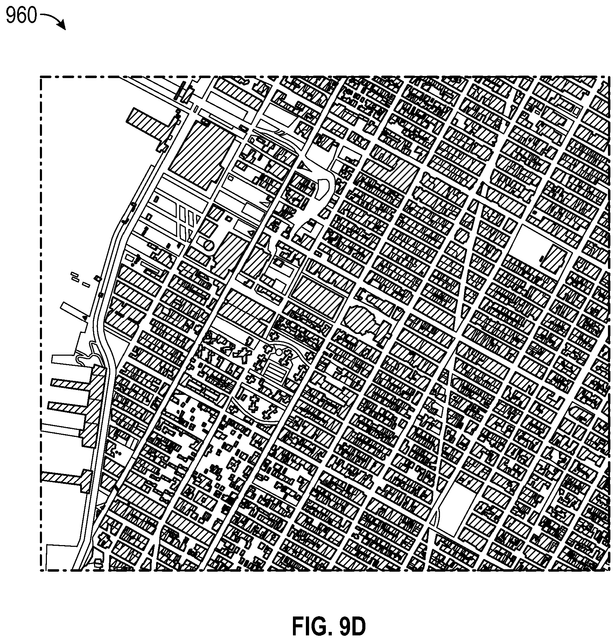

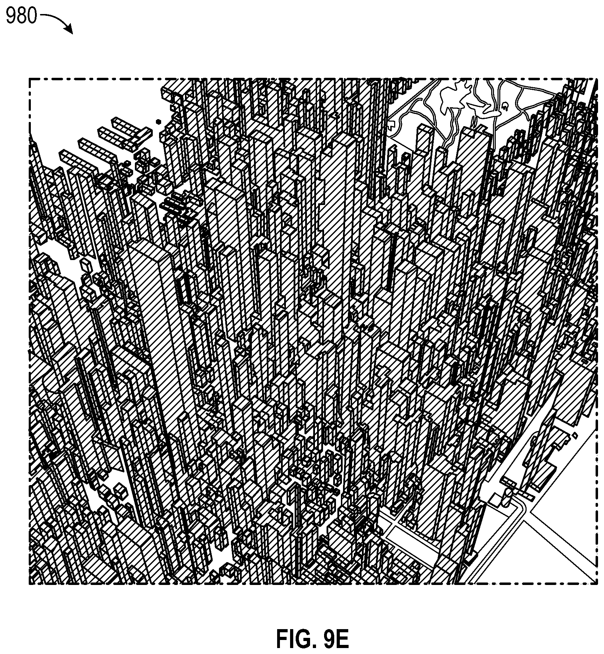

FIG. 9C shows an example visualization 940 of the second front-end application in standard rendering mode trying to render the one million plus data objects rather than the filtered subset of data objects near time square. This standard rendering mode, which is also displayed in FIGS. 9A-B, does not use the vector map tiles to support high scale. As a result, when trying to render the one million plus data objects, the rendering in the geospatial map may only be able to support a smaller subset of data objects and accordingly only render a portion of the intended geospatial map. However, by instead configuring the rendering specification and the underlying renderer functions to support vector map tiles, the data objects can be rendered with map vector tiles and support a much higher scale. In some instances, the rendering logic derived from the rendering specification can always contain logic to render vector map tiles. In such instances, the front-end application may just not access that portion of the logic because it does not support vector map tiles. Other front-end applications that do support vector map tiles can include them or as an option. As described above, the renderables generated can be embedded with the map vector tiles. As shown in FIG. 9D, an example visualization 960 shows the second front-end application in high scale rendering mode and being able to display the one million plus data objects. Similarly, FIG. 9E show an example visualization 980 of the first front-end application, which was capable of 3-D renderings, in high scale rendering mode being used to display the one million plus data objects as 3-D renderings.

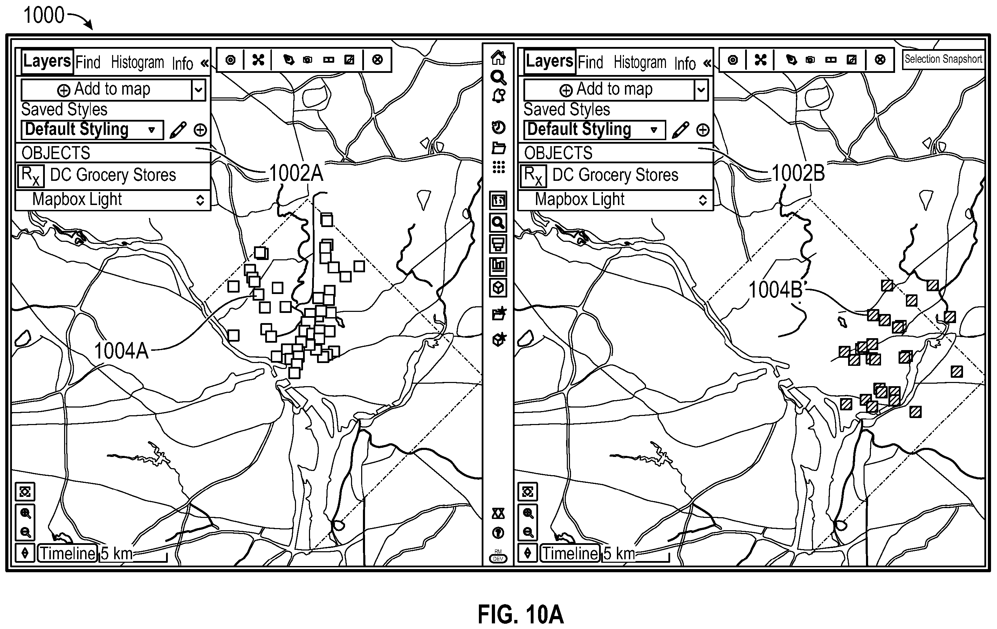

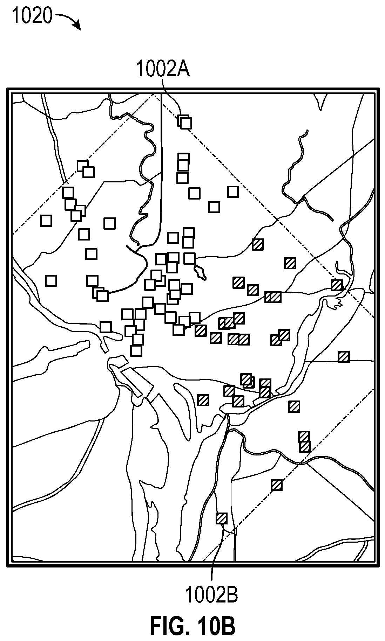

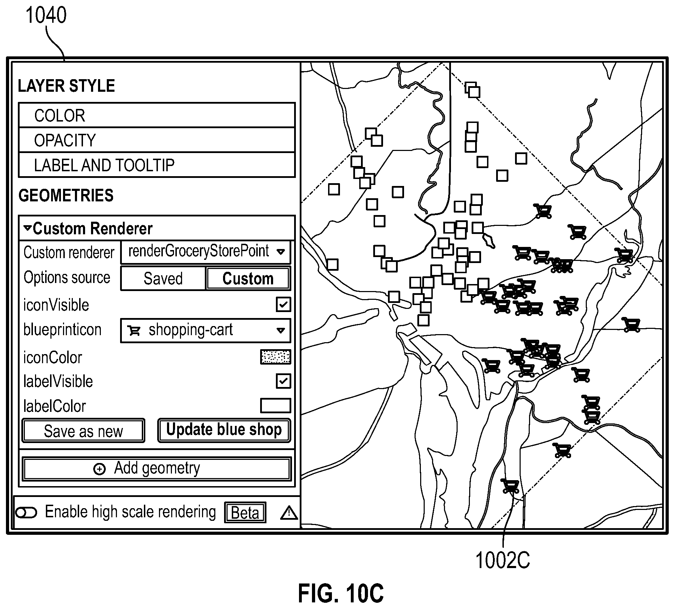

FIG. 10A shows two example visualizations 1000 of data objects on a geospatial map on a front-end application with the left visualization displaying a first set of data objects in a first style and the right visualization displaying a second set of data objects in a second style. The first set of data objects are represented by a first icon 1004A that can be the default rendering or adjusted according to user preference, such as by using the interactive user interface 1002A to update either the specification or particular renderables. Similarly, the second set of data objects are represented by a second icon 1004B that can be the default rendering or adjusted according to user preference, such as by using the interactive user interface 1002B to update either the rendering specification or particular renderables. The data object types displayed in FIG. 10A are grocery stores in DC. The sub-set of these data object types may be displayed in two different user interfaces for geospatial maps sourced from the same front-end application. The selection of these sub-sets can be either by filtering the data object types to particular wards of the geographic map, or by a user selecting these particular data objects for rendering. Accordingly, adjustments to renderables of one data object sub-set would not cause a change in the renderables for the other sub-set. For example, if the first icons 1004A were updated from boxes to lightning bolts, the categorization of the sub-sets would not cause the second icons 1004B to change. Furthermore, the particular rendering logic or the rendering specification used for rendering the icons in each sub-set can be saved as unique files. These unique files can be formatted as JSON files. These files can be combined together in either the same front-end application or a different front-end application. For example, FIG. 10B shows an example visualization 1020 of a second front-end application in which the files that are generated for each sub-set of data objects in FIG. 10A are combined together. Accordingly, the example visualization 1020 shows the first icon 1004A for the first sub-set alongside the second icon 1004B for the second sub-set in the same geospatial map. Furthermore, FIG. 10C further depicts the geospatial map presented alongside an interactive user interface to adjust the rendering specification. The example visualization 1040 shows that the sub-sets of data objects are uniquely organized and/or categorized in the rendering specification, such that a user can make adjustments to one sub-set without affecting change in the other. As shown in FIG. 10C, a user is able to update the second icon 1004B from boxes to a different icon 1004C display shopping carts using the interactive user interface. The first set of icons 1004A remain the same in FIG. 10C but can also be separately adjusted.

### Additional Example Implementations and Details

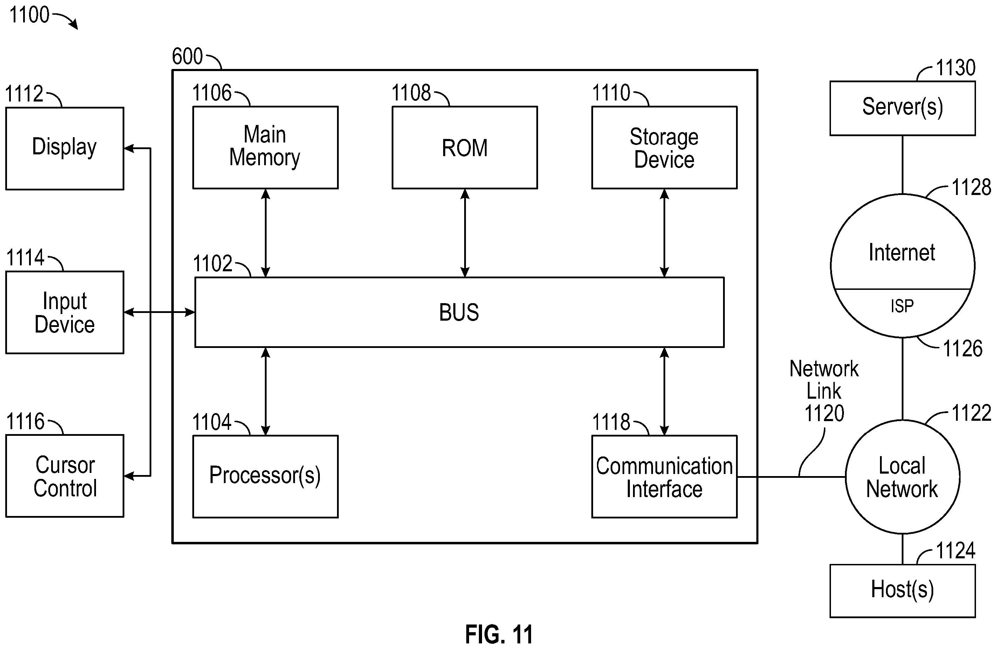

In an implementation of the system (e.g., one or more aspects of the visualization translation system 110, one or more aspects of the user device 120, one or more aspects of the computing environment 100, and/or the like) may comprise, or be implemented in, a "virtual computing environment". As used herein, the term "virtual computing environment" should be construed broadly to include, for example, computer-readable program instructions executed by one or more processors (e.g., as described in the example of FIG. 11) to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In various implementations the virtual computing environment may comprise one or more virtual machines, containers, and/or other types of emulations of computing systems or environments. In various implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interruptions. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In various implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In various alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in various implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, FIG. 11 shows a block diagram that illustrates a computer system 1100 upon which various implementations and/or aspects (e.g., one or more aspects of the computing environment 100, one or more aspects of the visualization translation system 110, one or more aspects of the user device 120, one or more aspects of the function database 140, and/or the like) may be implemented. Multiple such computer systems 1100 may be used in various implementations of the present disclosure. Computer system 1100 includes a bus 1102 or other communication mechanism for communicating information, and a hardware processor, or multiple processors, 1104 coupled with bus 1102 for processing information. Hardware processor(s) 1104 may be, for example, one or more general purpose microprocessors.

Computer system 1100 also includes a main memory 1106, such as a random-access memory (RAM), cache and/or other dynamic storage devices, coupled to bus 1102 for storing information and instructions to be executed by processor 1104. Main memory 1106 also may be used for storing temporary variables or other intermediate information during execution of instructions to be executed by processor 1104. Such instructions, when stored in storage media accessible to processor 1104, render computer system 1100 into a special-purpose machine that is customized to perform the operations specified in the instructions. The main memory 1106 may, for example, include instructions to implement server instances, queuing modules, memory queues, storage queues, user interfaces, and/or other aspects of functionality of the present disclosure, according to various implementations.

Computer system 1100 further includes a read only memory (ROM) 1108 or other static storage device coupled to bus 1102 for storing static information and instructions for processor 1104. A storage device 1110, such as a magnetic disk, optical disk, or USB thumb drive (Flash drive), and/or the like, is provided and coupled to bus 1102 for storing information and instructions.

Computer system 1100 may be coupled via bus 1102 to a display 1112, such as a cathode ray tube (CRT) or LCD display (or touch screen), for displaying information to a computer user. An input device 1114, including alphanumeric and other keys, is coupled to bus 1102 for communicating information and command selections to processor 1104. Another type of user input device is cursor control 1116, such as a mouse, a trackball, or cursor direction keys for communicating direction information and command selections to processor 1104 and for controlling cursor movement on display 1112. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computer system 1100 may include a user interface module to implement a GUI that may be stored in a mass storage device as computer executable program instructions that are executed by the computing device(s). Computer system 1100 may further, as described below, implement the techniques described herein using customized hard-wired logic, one or more ASICs or FPGAs, firmware and/or program logic which in combination with the computer system causes or programs computer system 1100 to be a special-purpose machine. According to one implementation, the techniques herein are performed by computer system 1100 in response to processor(s) 1104 executing one or more sequences of one or more computer-readable program instructions contained in main memory 1106. Such instructions may be read into main memory 1106 from another storage medium, such as storage device 1110. Execution of the sequences of instructions contained in main memory 1106 causes processor(s) 1104 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 1104 for execution. For example, the instructions may initially be carried on a magnetic disk or solid-state drive of a remote computer. The remote computer can load the instructions into its dynamic memory and send the instructions over a telephone line using a modem. A modem local to computer system 1100 can receive the data on the telephone line and use an infra-red transmitter to convert the data to an infra-red signal. An infra-red detector can receive the data carried in the infra-red signal and appropriate circuitry can place the data on bus 1102. Bus 1102 carries the data to main memory 1106, from which processor 1104 retrieves and executes the instructions. The instructions received by main memory 1106 may optionally be stored on storage device 1110 either before or after execution by processor 1104.

Computer system 1100 also includes a communication interface 1118 coupled to bus 1102. Communication interface 1118 provides a two-way data communication coupling to a network link 1120 that is connected to a local network 1122. For example, communication interface 1118 may be an integrated services digital network (ISDN) card, cable modem, satellite modem, or a modem to provide a data communication connection to a corresponding type of telephone line. As another example, communication interface 1118 may be a local area network (LAN) card to provide a data communication connection to a compatible LAN (or WAN component to communicated with a WAN). Wireless links may also be implemented. In any such implementation, communication interface 1118 sends and receives electrical, electromagnetic, or optical signals that carry digital data streams representing various types of information.

Network link 1120 typically provides data communication through one or more networks to other data devices. For example, network link 1120 may provide a connection through local network 1122 to a host computer 1124 or to data equipment operated by an Internet Service Provider (ISP) 1126. ISP 1126 in turn provides data communication services through the worldwide packet data communication network now commonly referred to as the "Internet" 1128. Local network 1122 and Internet 1128 both use electrical, electromagnetic, or optical signals that carry digital data streams. The signals through the various networks and the signals on network link 1120 and through communication interface 1118, which carry the digital data to and from computer system 1100, are example forms of transmission media.

Computer system 1100 can send messages and receive data, including software code, through the network(s), network link 1120 and communication interface 1118. In the Internet example, a server 1130 might transmit a requested code for an application program through Internet 1128, ISP 1126, local network 1122 and communication interface 1118.

The received code may be executed by processor 1104 as it is received, and/or stored in storage device 1110, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements, and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A computerized method, performed by a computing system having one or more hardware computer processors and one or more non-transitory computer readable storage device storing software instructions executable by the computing system to perform the computerized method comprising: receiving a request from a front-end application for visualizing a plurality of data objects on a geospatial map, each of the data objects associated with a corresponding data object type; accessing an ontology that includes associations between data object types and rendering specifications, the rendering specifications being in a standard format for a plurality of front-end applications; based on the rendering specifications associated with the plurality of data objects, generating a plurality of renderables corresponding to each of the plurality of front-end applications; and providing corresponding renderables to the requesting front-end application that are usable to visualize the plurality of data objects on the geospatial map.

Clause 2. The method of clause 1, further comprising: receiving a request from a second front-end application for visualizing the plurality of data objects on a second geospatial map, the second front-end application being one of the plurality of front-end applications; and providing the corresponding renderables to the requesting second front-end application that are usable to visualize the plurality of data objects on the second geospatial map.

Clause 3. The method of clause 1, further comprising: receiving a second request from the front-end application for visualizing the plurality of data objects on the geospatial map, the second request associated with a different rendering behavior than the first request; updating the ontology that includes associations between data object types and rendering specifications by updating the rendering specification to be associated the different rendering behavior; based on the updated rendering specifications associated with the plurality of data objects, generating an updated plurality of renderables corresponding to the front-end applications; and providing the corresponding updated renderables to the requesting front-end application that are usable to visualize the plurality of data objects on the geospatial map.

Clause 4. The method of clause 3, wherein the different rendering behavior is not in the standard format for the plurality of front-end applications.

Clause 5. The method of clause 4, further comprising receiving data from at least one of the plurality of front-end applications that the updated rendering specification is incompatible with the at least one of the plurality of front-end applications.

Clause 6. The method of clause 1, wherein the rendering specification is configured to be customized by the front-end application or by adjustment of program code associated with the rendering specification.

Clause 7. The method of clause 6, wherein the first rendering specifications of a first subset of the data object type can be customized to be different from a second rendering specifications of a second subset of the data object types.

Clause 8. The method of clause 7, wherein the first subset and the second subset of the data object types are different based on properties of the data object types.

Clause 9. The method of clause 7, further comprising visualizing the plurality of data objects on the geospatial map according to the first rendering specification of the first subset of the data object types concurrently with the second rendering specification of the second subset of the data object types.

Clause 10. The method of clause 6, wherein at least one of the original rendering specification and the customized rendering specification can be saved to be accessed for later use.

Clause 11. The method of clause 6, wherein the rendering specification is configured to be customized by filtering a sub-set of the data object types based on properties associated with the data object types, and the rendering specification customized only on the sub-set.

Clause 12. The method of clause 11, wherein the filtering comprises conditional styling, wherein the conditional styling comprises program code setting conditions associated with the properties of the data object types to filter the sub-set of the data object types.

Clause 13. The method of clause 6, further comprising: generating customized renderables corresponding to the front-end application based on the customized rendering specification associated with the plurality of data objects; and displaying, on an interactive user interface, a visualization of the plurality of data objects on the geospatial map using both the corresponding renderables and the corresponding customized renderables on the front-end application.

Clause 14. The method of clause 1, wherein the front-end application is configured to display three-dimensional (3-D) geospatial maps, and the corresponding renderables are usable to visualize the plurality of data objects as 3-D renderings based on the rendering specification.

Clause 15. The method of clause 1, wherein the front-end application is configured to display high scale renderings, and the corresponding renderables are embedded with map vector tiles usable to visualize the plurality of data objects based on the rendering specification.

Clause 16. The method of clause 15, wherein the plurality of data object comprises at least one million data objects.

Clause 17. The method of clause 1, wherein generating the plurality of renderables corresponding to each of the plurality of front-end applications comprises executing rendering functions for each of the plurality of front-end applications based on the rendering specification, wherein the rendering specifications is associated with rendering functions corresponding to the plurality of data objects.

Clause 18. The method of clause 17, further comprising receiving user input associated with one or more rendering functions that correspond with at least one of the plurality of front-end applications, the one or more rendering functions executable with the rendering specification to generate corresponding renderables with the at least one of the plurality of front-end applications.

Clause 19. The method of clause 1, wherein the plurality of renderables are associated with application programming interfaces (APIs) configured generate a rendering behavior based on the association between the data object type and the rendering specification.

Clause 20. The method of clause 1, further comprising: receiving user input indicating one or more capabilities of a new front-end application for visualizing the plurality of data objects on a geospatial map; and receiving user input indicating at least one of features or functionalities of the new front-end applications usable to generate corresponding renderables based on the rendering specification.

Clause 21. The method of clause 1, further comprising: displaying, on an interactive user interface, a visualization of the plurality of data objects on the geospatial map using corresponding renderables on the front-end application.

Clause 22. The method of clause 21, further comprising: receiving a request from the front-end application to update the rendering specification for the data object type to a different rendering behavior; based on the updated rendering specifications associated with the plurality of data objects, generating updated renderables corresponding to each of the plurality of front-end applications; and automatically displaying, on the interactive user interface in real-time, an updated visualization of the plurality of data objects on the geospatial map using corresponding updated renderables on the front-end application.

Clause 23. The method of clause 22, further comprising: displaying, on the interactive user interface, a second visualization of the plurality of data objects on a second geospatial map using corresponding renderables on a second front-end application; and automatically displaying, on the interactive user interface, a second updated visualization of the plurality of data objects on the second geospatial map using corresponding updated renderables on the second front-end application, wherein the automatic displaying of the second updated visualization is concurrently displayed with the first updated visualization associated with the first front-end application.

Clause 24. The method of clause 1, wherein the data objects are accessible from a third-party data source, and wherein the ontology is configured to integrate with the third-party data source.

Clause 25. The method of clause 1, wherein the data object types comprise tasking object types.

Clause 26. The method of clause 1, the rendering specifications are formatted as JSON files.

Clause 27. The method of clause 1, wherein the rendering specification associated with the data object types correspond to at least one of: geoJsons, icons, bounding boxes, or heatmaps.

Clause 28. A system comprising: one or more computer-readable storage mediums configured to store program instructions; and one or more processors configured to execute the program instructions to cause the system to perform the computer-implemented method of any of Clauses 1-27.

Clause 29. One or more computer-readable storage mediums configured to store program instructions, the program instructions executable by one or more processors to cause the one or more processors to perform the computer-implemented method of any of Clauses 1-27.

## Claims

1. A computerized method, performed by a computing system having one or more hardware computer processors and one or more non-transitory computer readable storage device storing software instructions executable by the computing system to perform the computerized method comprising:
receiving a request from a front-end application for visualizing a plurality of data objects on a geospatial map, each of the data objects associated with a corresponding data object type;
accessing an ontology that includes associations between data object types and rendering specifications, the rendering specifications being in a standard format for a plurality of front-end applications;
based on the rendering specifications associated with the plurality of data objects, generating a plurality of renderables corresponding to each of the plurality of front-end applications; and
providing corresponding renderables to the requesting front-end application that are usable to visualize the plurality of data objects on the geospatial map.

2. The method of claim 1, further comprising:
receiving a request from a second front-end application for visualizing the plurality of data objects on a second geospatial map, the second front-end application being one of the plurality of front-end applications; and
providing the corresponding renderables to the requesting second front-end application that are usable to visualize the plurality of data objects on the second geospatial map.

3. The method of claim 1 or claim 2, further comprising:
receiving a second request from the front-end application for visualizing the plurality of data objects on the geospatial map, the second request associated with a different rendering behavior than the first request;
updating the ontology that includes associations between data object types and rendering specifications by updating the rendering specification to be associated with the different rendering behavior;
based on the updated rendering specifications associated with the plurality of data objects, generating an updated plurality of renderables corresponding to the front-end applications; and
providing the corresponding updated renderables to the requesting front-end application that are usable to visualize the plurality of data objects on the geospatial map.

4. The method of claim 3, wherein the different rendering behavior is not in the standard format for the plurality of front-end applications,
wherein optionally the method further comprises receiving data from at least one of the plurality of front-end applications that the updated rendering specification is incompatible with the at least one of the plurality of front-end applications.

5. The method of any preceding claim, wherein the rendering specification is configured to be customized by the front-end application or by adjustment of program code associated with the rendering specification,
wherein optionally the first rendering specifications of a first subset of the data object type can be customized to be different from a second rendering specifications of a second subset of the data object type,
wherein optionally the first subset and the second subset of the data object types are different based on properties of the data object types.

6. The method of claim 5, further comprising visualizing the plurality of data objects on the geospatial map according to the first rendering specification of the first subset of the data object types concurrently with the second rendering specification of the second subset of the data object types.

7. The method of claims 5 or claim 6, wherein at least one of the original rendering specification and the customized rendering specification is capable of being saved to be accessed for later use.

8. The method of any of claims 5 to 7, wherein the rendering specification is configured to be customized by filtering a sub-set of the data object types based on properties associated with the data object types, and the rendering specification customized only on the sub-set,
wherein optionally the filtering comprises conditional styling, wherein the conditional styling comprises program code setting conditions associated with the properties of the data object types to filter the sub-set of the data object types.

9. The method of any of claims 5 to 8, further comprising:
generating customized renderables corresponding to the front-end application based on the customized rendering specification associated with the plurality of data objects; and
displaying, on an interactive user interface, a visualization of the plurality of data objects on the geospatial map using both the corresponding renderables and the corresponding customized renderables on the front-end application.

10. The method of any preceding claim, wherein the front-end application is configured to display three-dimensional (3-D) geospatial maps, and the corresponding renderables are usable to visualize the plurality of data objects as 3-D renderings based on the rendering specification.

11. The method of any of claims 1 to 9, wherein the front-end application is configured to display high scale renderings, and the corresponding renderables are embedded with map vector tiles usable to visualize the plurality of data objects based on the rendering specification,

12. The method of any preceding claim, wherein generating the plurality of renderables corresponding to each of the plurality of front-end applications comprises executing rendering functions for each of the plurality of front-end applications based on the rendering specification, wherein the rendering specifications is associated with rendering functions corresponding to the plurality of data objects,
wherein the method optionally further comprises receiving user input associated with one or more rendering functions that correspond with at least one of the plurality of front-end applications, the one or more rendering functions executable with the rendering specification to generate corresponding renderables with the at least one of the plurality of front-end applications.

13. The method of any preceding claim, further comprising:
receiving user input indicating one or more capabilities of a new front-end application for visualizing the plurality of data objects on a geospatial map; and
receiving user input indicating at least one of features or functionalities of the new front-end applications usable to generate corresponding renderables based on the rendering specification.

14. The method of any preceding claim, further comprising:
displaying, on an interactive user interface, a visualization of the plurality of data objects on the geospatial map using corresponding renderables on the front-end application.

15. A system comprising:
one or more computer-readable storage mediums configured to store program instructions; and
one or more processors configured to execute the program instructions to cause the system to perform the computer-implemented method of any preceding claim.

## Amended claims

### Amended claims in accordance with Rule 137(2) EPC.

1. A computerized method, performed by a computing system having one or more hardware computer processors and one or more non-transitory computer readable storage device storing software instructions executable by the computing system to perform the computerized method comprising:
receiving (410) a request from a front-end application for visualizing a plurality of data objects on a geospatial map, each of the data objects associated with a corresponding data object type;
accessing (420) an ontology that includes associations between data object types and rendering specifications, the rendering specifications being in a standard format for a plurality of front-end applications;
based on the rendering specifications associated with the plurality of data objects, generating (430) a plurality of renderables corresponding to each of the plurality of front-end applications; and
providing (440) corresponding renderables to the requesting front-end application that are usable to visualize the plurality of data objects on the geospatial map.

2. The method of claim 1, further comprising:
receiving a request from a second front-end application for visualizing the plurality of data objects on a second geospatial map, the second front-end application being one of the plurality of front-end applications; and
providing the corresponding renderables to the requesting second front-end application that are usable to visualize the plurality of data objects on the second geospatial map.

3. The method of claim 1 or claim 2, further comprising:
receiving a second request from the front-end application for visualizing the plurality of data objects on the geospatial map, the second request associated with a different rendering behavior than the first request;
updating the ontology that includes associations between data object types and rendering specifications by updating the rendering specification to be associated with the different rendering behavior;
based on the updated rendering specifications associated with the plurality of data objects, generating an updated plurality of renderables corresponding to the front-end applications; and
providing the corresponding updated renderables to the requesting front-end application that are usable to visualize the plurality of data objects on the geospatial map.

4. The method of claim 3, wherein the different rendering behavior is not in the standard format for the plurality of front-end applications,
wherein optionally the method further comprises receiving data from at least one of the plurality of front-end applications that the updated rendering specification is incompatible with the at least one of the plurality of front-end applications.

5. The method of any preceding claim, wherein the rendering specification is configured to be customized by the front-end application or by adjustment of program code associated with the rendering specification,
wherein optionally the first rendering specifications of a first subset of the data object type can be customized to be different from a second rendering specifications of a second subset of the data object type,
wherein optionally the first subset and the second subset of the data object types are different based on properties of the data object types.

6. The method of claim 5, further comprising visualizing the plurality of data objects on the geospatial map according to the first rendering specification of the first subset of the data object types concurrently with the second rendering specification of the second subset of the data object types.

7. The method of claims 5 or claim 6, wherein at least one of the original rendering specification and the customized rendering specification is capable of being saved to be accessed for later use.

8. The method of any of claims 5 to 7, wherein the rendering specification is configured to be customized by filtering a sub-set of the data object types based on properties associated with the data object types, and the rendering specification customized only on the sub-set,
wherein optionally the filtering comprises conditional styling, wherein the conditional styling comprises program code setting conditions associated with the properties of the data object types to filter the sub-set of the data object types.

9. The method of any of claims 5 to 8, further comprising:
generating customized renderables corresponding to the front-end application based on the customized rendering specification associated with the plurality of data objects; and
displaying, on an interactive user interface, a visualization of the plurality of data objects on the geospatial map using both the corresponding renderables and the corresponding customized renderables on the front-end application.

10. The method of any preceding claim, wherein the front-end application is configured to display three-dimensional (3-D) geospatial maps, and the corresponding renderables are usable to visualize the plurality of data objects as 3-D renderings based on the rendering specification.

11. The method of any of claims 1 to 9, wherein the front-end application is configured to display high scale renderings, and the corresponding renderables are embedded with map vector tiles usable to visualize the plurality of data objects based on the rendering specification,

12. The method of any preceding claim, wherein generating the plurality of renderables corresponding to each of the plurality of front-end applications comprises executing rendering functions for each of the plurality of front-end applications based on the rendering specification, wherein the rendering specifications is associated with rendering functions corresponding to the plurality of data objects,
wherein the method optionally further comprises receiving user input associated with one or more rendering functions that correspond with at least one of the plurality of front-end applications, the one or more rendering functions executable with the rendering specification to generate corresponding renderables with the at least one of the plurality of front-end applications.

13. The method of any preceding claim, further comprising:
receiving user input indicating one or more capabilities of a new front-end application for visualizing the plurality of data objects on a geospatial map; and
receiving user input indicating at least one of features or functionalities of the new front-end applications usable to generate corresponding renderables based on the rendering specification.

14. The method of any preceding claim, further comprising:
displaying, on an interactive user interface, a visualization of the plurality of data objects on the geospatial map using corresponding renderables on the front-end application.

15. A system (600) comprising:
one or more computer-readable storage mediums (1106, 1108, 1110) configured to store program instructions; and
one or more processors (1104) configured to execute the program instructions to cause the system to perform the computer-implemented method of any preceding claim.
